# EUROPÄISCHE PATENTSCHRIFT

(11) **EP 0 631 901 B1**
(45) Veröffentlichungstag und Bekanntmachung des Hinweises auf die Patenterteilung: **23.04.1997**
(21) Anmeldenummer: 94109567.1
(22) Anmeldetag: 21.06.1994
(51) Int. Cl.: B60N 2/22, B60N 2/44

(54) **Verstellvorrichtung, insbesondere für Kraftfahrzeugsitz**
Adjusting device, in particular for vehicle seats
Dispositif de réglage, en particulier pour sièges de véhicule

(30) Priorität: 26.06.1993 DE 4321335
(43) Veröffentlichungstag der Anmeldung: 04.01.1995
(60) Teilanmeldung: 96110126.8
(73) Patentinhaber: BURGER SÖHNE GmbH + Co., D-71065 Sindelfingen (DE)
(72) Erfinder: Helbig, Thorsten, Dipl.-Ing. (FH), D-70199 Stuttgart (DE); Schmidt, Bernd, Dipl.-Ing. (FH), D-75391 Gechingen (DE); Klink, Josef, Dipl.-Ing., D-72202 Nagold (DE); Dinkel, Emil, D-71272 Renningen (DE); Speck, Volker, D-71065 Sindelfingen (DE); Schneider, Fritz, D-74706 Osterburken (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 370 502
- EP-A- 0 497 007
- WO-A-93/08410
- DE-A- 2 323 640
- DE-A- 3 734 363
- JP-A- 5 126 170
- PATENT ABSTRACTS OF JAPAN vol. 13, no. 498 (M-890) 9. November 1989 & JP-A-01 199 026 (ITO KENICHIRO)
- PATENT ABSTRACTS OF JAPAN vol. 14, no. 69 (M-932) 8. Februar 1990 & JP-A-01 288 633 (ITO KENICHIRO)

## Beschreibung

Die Erfindung betrifft eine Verstellvorrichtung zur Durchführung mindestens einer Verstellfunktion, insbesondere zur Verstellung eines Kraftfahrzeugsitzes, gemäß dem Oberbegriff des Patentanspruchs 1.

Bei einer bekannten Verstellvorrichtung dieser Art zum Verstellen eines Kraftfahrzeugsitzes (DE 37 34 363 C2) weist das Getriebe zur Realisierung von Freilauf und Hemmung eine zweigeteilte Welle auf, bei welcher das äußere Ende des abtriebseitigen Wellenteils als ein mit einer Zahnstange kämmendes Triebrad ausgebildet ist und das äußere Ende des antriebsseitigen Wellenteils mit einem die Betätigungeinheit bildenden Handstellrad fest verbunden ist. Die beiden anderen Enden der Wellenteile sind als miteinander verklemmbare Kupplungsscheiben ausgebildet. Die mit dem abtriebsseitigen Wellenteil einstückige Kupplungsscheibe ist dabei unter Belassung eines Ringspalts in einem feststehenden Gehäuse mit kreisförmiger Innenwand aufgenommen und die mit dem antriebsseitigen Wellenteil verbundene Kupplungsscheibe greift mit axialen, stiftartigen Mitnehmern in den Ringspalt zwischen abtriebsartiger Kupplungsscheibe und Gehäuse ein. Die im Gehäuse einliegende abtriebsartige Kupplungsscheibe trägt am Umfang gleichmäßig zueinander versetzt angeordnete Radialvorsprünge und unmittelbar an den in Umfangsrichtung weisenden Stirnseiten der Radialvorsprünge eingeformte Mulden, in welchen jeweils walzenförmige Klemmkörper einliegen, die sich am Muldengrund und an der kreisförmigen Innenwand des Gehäuses abrollen. Die Klemmkörper werden von Druckfedern an die von den Radialvorsprüngen abgekehrten Flanken ihrer Mulden angepreßt und verkeilen so bei Drehung der abtriebsseitigen Kupplungsscheibe diese im Gehäuse. Bei Kraftfluß von dem abtriebsseitigen Wellenteil zu dem antriebsseitigen Wellenteil sperrt also das Getriebe. Wird hingegen das Handrad gedreht, so verschieben die Mitnehmer an der antriebsseitigen Kupplungsscheibe die Klemmkörper aus der Klemmstellung und legen sie an Stirnflächen der Radialvorsprünge an, so daß die abtriebsseitige Kupplungsscheibe mit der antriebsseitigen Kupplungsscheibe mitdreht. Bei Kraftfluß vom antriebsseitigen Wellenteil zu dem abtriebsseitigen Wellenteil hat das Getriebe also Freilauf und überträgt die Drehung des Handrades in dem einen oder anderen Drehsinn auf das abtriebsseitige Triebrad, das eine entsprechende Verstellung am Kraftfahrzeugsitz durchführt.

Bei dieser bekannten Verstellvorrichtung erfolgt durch Drehen des Handrades eine stufenlose Verstellung des Kraftfahrzeugsitzes, wobei die jeweils gewünschte Einstellung des Kraftfahrzeugsitzes durch das Getriebe chrashsicher arretiert wird. Allerdings ist die Zugänglichkeit des Handrades nach Platznehmen des Sitzbenutzers auf dem Sitz in den weitaus meisten Fällen wenig günstig und das Drehen des Handrades in dieser Position, insbesondere bei großen Verstellbewegungen am Kraftfahrzeugsitz, recht mühsam, so daß häufig die Sitzeinstellung nach Aussteigen von außen durch die geöffnete Kraftfahrzeugtür durchgeführt wird.

Der Erfindung liegt die Aufgabe zugrunde, bei einer Verstellvorrichtung der eingangs genannten Art, insbesondere für Kraftfahrzeugsitze, die Zugänglichkeit der Betätigungseinheit zu verbessern und den Bedienungskomfort bei der Durchführung von Verstellungen wesentlich zu erhöhen.

Die Aufgabe ist bei einer Verstellvorrichtung der im Oberbegriff des Patentanspruchs 1 definierten Gattung erfindungsgemäß durch die Merkmale im Kennzeichenteil des Patentanspruchs 1 gelöst.

Das erfindungsgemäß verwendete stufenlose Schrittschaltwerk mit Handschwenkhebel erleichtert wesentlich die Durchführung der Verstellfunktionen. Der Handschwenkhebel braucht nur in die eine oder andere Richtung geschwenkt zu werden, wodurch der Antrieb um den Schwenkweg des Schwenkhebels gedreht wird. Nach Freigeben des Schwenkhebels wird dieser automatisch in seine Nullage zurückgeführt. Bei wiederholter Schwenkung des Schwenkhebels bis zu einem durch das Schrittschaltwerk vorgegebenen maximalen Schwenkwinkel können größere Verstellbewegungen herbeigeführt werden. Eine Feineinstellung ist durch Schwenken des Schwenkhebels um einen beliebig kleinen Schwenkwinkel innerhalb seines maximalen Schwenkwegs möglich. Durch symmetrische Auslegung des Schrittschaltwerks ist der Verstellvorgang in beiden Schwenk- oder Drehrichtungen möglich.

Vorteilhafte Ausführungsformen der erfindungsgemäßen Verstellvorrichtung mit zweckmäßigen Weiterbildungen und Ausgestaltungen der Erfindung sind in den weiteren Patentansprüchen angegeben.

Das erfindungsgemäße Schrittschaltwerk läßt sich in besonders vorteilhafter Weise realisieren, wenn gemäß einer bevorzugten Ausführungsform der Erfindung ein mit dem Antrieb drehfest verbundenes Innenteil mit zylindrischer Außenfläche und ein mit dem Schwenkwinkel drehfest koppelbares Außenteil zylindrischer, das Innenteil unter Belassung eines Ringspalts zu dessen Außenfläche konzentrisch umschließender Innenfläche vorgesehen wird. In dem Ringspalt sind mindestens zwei räumlich feststehende Anschläge um vorzugsweise gleiche Umfangswinkel zueinander versetzt angeordnet und liegen Klemmkörper ein, die sich einerseits an den beiden Zylinderflächen von Innen- und Außenteil abrollen und sich andererseits unter Federkraft jeweils paarweise an voneinander in Umfangsrichtung abgekehrten Seiten der Anschläge abstützen. An einer der Zylinderflächen von Innen- und Außenteil ist eine der Anzahl der Anschläge entsprechende Zahl von in den Ringspalt radial vorspringenden Axialrippen mit bogenförmigen Flanken ausgebildet, die um gleiche Umfangswinkel wie die Anschläge zueinander versetzt so angeordnet sind, daß sie in der Grundstellung des Schwenkhebels den Anschlägen radial gegenüberstehen. Beim Betätigen des Schwenkhebels wird mit diesem das Außenteil aus der Nullage bewegt, und bereits nach kurzem Schwenkweg führen die Axialrippen über die Klemmkörper zum Verspannen des Außenteils mit dem Innenteil. Das Innenteil wird mitbewegt und führt die gewünschte Verstellbewegung aus. Wird der Schwenkhebel freigegeben, so schieben die an den Klemmkörpern angreifenden Federkräfte diese wieder unter Mitnahme des Außenteils und damit des Schwenkhebels an die Anschläge zurück. Das Schrittschaltwerk mit Schwenkhebel nimmt wieder seine Nullage ein.

Wenn gemäß einer vorteilhaften Ausführungsform der Erfindung mehr als ein jeweils einem Getriebe zugeordnetes Schrittschaltwerk vorgesehen und der Handhebel wahlweise mit einem der Schrittschaltwerke oder mit beiden Schrittschaltwerken gleichzeitig koppelbar ausgebildet wird, so läßt sich mit einem einzigen Handschwenkhebel eine Mehrzahl von Verstellfunktionen realisieren. So lassen sich z.B. an einem Kraftfahrzeugsitz mit einem einzigen Handschwenkhebel sowohl die Höhenverstellung des Sitzkissens als auch die Neigungswinkelverstellung der Rückenlehne oder die Kopfstützeneinstellung ausführen.

Die wahlweise Kopplung von Handschwenkhebel und Schrittschaltwerk läßt sich in verschiedener Weise realisieren. In einer bevorzugten Ausführungsform der Erfindung ist der Handschwenkhebel koaxial zum Innen- und Außenteil der Schrittschaltwerke schwenkbar gelagert und weist mindestens eine der Anzahl der Schrittschaltwerke entsprechende Zahl von axial abstehenden Mitnehmerstiften auf, die wahlweise in eine axiale Aufnahme in dem Außenteil des jeweils einem Mitnehmerstift zugeordneten Schrittschaltwerks zu dessen Drehmitnahme formschlüssig einschiebbar sind. Dabei kann der Handschwenkhebel seitlich der Schrittschaltwerke oder zwischen zwei Schrittschaltwerken angeordnet werden.

Im ersten Fall sind nach einer vorteilhaften Ausführungsform der Erfindung die Mitnehmerstifte im Schwenkhebel axial verschieblich ausgebildet, und an jedem Mitnehmerstift greift ein diesen in Außereingriff mit dem Außenteil des zugeordneten Schrittschaltwerks haltendes elastisches Rückstellglied an. Ein manuell zu bedienendes Verriegelungsglied ist wahlweise mit einem der Mitnehmer zu dessen Verriegelung in seiner Eingriffstellung im Außenteil des zugeordneten Schrittschaltwerks in Eingriff bringbar.

Im zweiten Fall der Anordnung des Schwenkhebels zwischen zwei Schrittschaltwerken ist der Schwenkhebel selbst axial verschieblich angeordnet und trägt auf jeder seiner voneinander abgekehrten Stirnseiten mindestens einen feststehenden, axial vorspringenden Mitnehmerstift. Durch axiale Verschiebung des Schwenkhebels in die eine oder andere Richtung werden die Mitnehmerstifte in die mindestens eine axiale Aufnahme im Außenteil des einen oder anderen Schrittschaltwerkes eingeschoben.

Alternativ kann die wahlweise Kopplung des Handschwenkhebels mit den Schrittschaltwerken gemäß einer weiteren Ausführungsform der Erfindung dadurch herbeigeführt werden, daß die Außenteile zweier nebeneinander angeordneter Schrittschaltwerke in kongruenter Ausrichtung über einen Zwischenring mit rein zylindrischer Innenfläche miteinander zu einer axial verschieblichen Schaltbuchse verbunden sind. Die Schaltbuchse ist drehfest mit dem Handschwenkhebel verbunden. Bei Axialverschiebung der Schaltbuchse in die eine oder andere Richtung übergreift der Zwischenring die Klemmkörper in dem einen oder anderen Schrittschaltwerk zur Herstellung eines Freilaufs, während im anderen Schrittschaltwerk die Schaltbuchse über die Klemmkörper mit dem Innenteil verkeilt wird.

Das Getriebe mit Freilauf und Hemmung wird im einfachsten Fall durch die Verstellorgane der Verstellvorrichtung selbst gebildet, z.B. durch ein in einer axial verschieblichen Zahnstange kämmendes Antriebsritzel, wobei durch Verschiebung der Zahnstange die Verstellfunktion, z.B. die Kopfstützenverstellung, bewirkt wird. Vorausgesetzt ist jedoch, daß das Verstellorgansystem, z.B. Antriebsritzelzahnstange, eine Selbsthemmung aufweist. Im Falle einer fehlenden Selbsthemmung und zwecks zuverlässiger Sicherung der vorgenommenen Einstellung auch auf schlechten Wegstrecken oder im Crashfall wird gemäß einer bevorzugten Ausführungsform der Erfindung das Getriebe mit Hemmung und Freilauf dadurch realisiert, daß eine mit einem Verstellorgan drehfest verbundene abtriebsseitige Innenwelle und ein feststehendes Gehäuse vorgesehen ist, das mit einer zylindrischen Gehäuseinnenwand die Innenwelle unter Belassung eines Ringspalts zu deren Außenmantel konzentrisch umschließt. Die Innenwelle trägt um vorzugsweise gleiche Umfangswinkel zueinander versetzt angeordnete, in den Ringspalt hineinragende Radialvorsprünge und im Außenmantel eine doppelte Anzahl von Vertiefungen, die in Umfangsrichtung gesehen auf einer Seite jeweils von einer Radialschulter der Radialvorsprünge begrenzt werden und deren Tiefe zu der von den Radialschultern abgekehrten Seite hin abnimmt. In den Vertiefungen liegt jeweils ein Klemmkörper ein, der am Boden der Vertiefung und an der Gehäuseinnenfläche anliegt und mittels eines federelastischen Elements zu der von der Radialschulter abgekehrten Seite der Vertiefung hin verschoben wird. In den Ringspalt ragt eine der Anzahl der Radialvorsprünge entsprechende Zahl von antriebsseitigen axialen Mitnehmern hinein, die jeweils zwischen zwei einander benachbarten Klemmkörpern so plaziert sind, daß sie in Umfangsrichtung einen nur geringen Abstand zu jedem Klemmkörper einhalten. Bei dieser Ausführung des Getriebes kann ein auf die Innenwelle eingeleiteter Bewegungsimpuls, z.B. durch Crash, nicht ausgeführt werden, da dies zu einem weiteren Verkeilen der Klemmkörper zwischen Gehäuse und Innenwelle führt. Zum Ausführen einer Verstellbewegung werden durch die Mitnehmer die Klemmkörper aus der Sperrposition bis zur Anlage an den Radialvorsprüngen der Innenwelle geschoben, und anschließend wird die Innenwelle über den gewünschten Weg mitbewegt. Wird keine Verstellbewegung der Mitnehmer ausgeführt, sind Gehäuse und Innenwelle immer zueinander arretiert.

In einer bevorzugten Ausführungsform der Erfindung ist die Gehäuseinnenwand mit einer flachen, feinstufigen Innenverzahnung versehen und die Klemmkörper als Fünffachprismen und die Vertiefungen als asymmetrische, im Querschnitt etwa sägezahnförmige Längsnuten ausgebildet, deren größte Tiefe am Fuße der Radialschultern der Radialvorsprünge liegt. Die Innenverzahnung an der Gehäuseinnenwand und die dieser zugekehrten Prismenfläche der auf dem Nutgrund der Längsnuten in Umfangsrichtung verschiebbaren Fünfeckprismen sind so aufeinander abgestimmt, daß die Fünfeckprismen von ihren federelastischen Elementen formschlüssig in die Innenverzahnung eingeschoben werden. Durch diesen Formschluß wird ein selbständiges Verstellen der Verstellvorrichtung, z.B. durch Schwingungen auf einer schlechten Wegstrecke, absolut ausgeschlossen. Das Verstellen und Verriegeln erfolgt nicht mehr vollkommen stufenlos sondern in feinstufigen Schritten, wodurch ein besserer Formschluß und ein sicheres Verkeilen erzielt wird.

In einer vorteilhaften Ausführungsform der Erfindung weist das Getriebe wiederum eine abtriebsseitige, mit einem Verstellorgan drehfest verbundene Innenwelle und ein feststehendes Gehäuse auf, daß mit einer zylindrischen Gehäuseinnenwand die Innenwelle unter Belassung eines Ringspalts zu deren Außenmantel konzentrisch umschließt. Die Innenwelle trägt hier um vorzugsweise gleiche Umfangswinkel zueinander versetzt angeordnete Radialnuten, und an ihrem Außenmantel ist eine doppelte Anzahl von Erhebungen angeformt, deren Höhe jeweils zu einer Nutflanke der Radialnuten hin ansteigt. Zwischen jeder Erhebung und der Gehäuseinnenwand liegt ein Klemmkörper ein, der mittels eines federelastischen Elements in Richtung zur Nutflanke der Radialnuten hin verschoben wird. In jede Radialnut greift ein antriebsseitiger axialer Mitnehmer mit geringem Abstand von den Nutflanken ein, der in Radialrichtung über den Nutrand in den Bereich zwischen den beiden Klemmkörpern derart hineinragt, daß er bei Verschiebung in Umfangsrichtung zunächst einen Klemmkörper gegen die Kraft des federbelasteten Elements verschiebt bevor er an der Nutflanke der Radialnut zur Anlage kommt. Dadurch wird zunächst die Klemmung zwischen Innenwelle und Gehäuse aufgehoben und anschließend die Innenwelle durch direkten Formschluß zwischen Mitnehmer und Innenwelle unter Umgehung der Klemmkörper gedreht. Die Ausbildung des Getriebes wird bevorzugt zur Übertragung großer Verstellkräfte eingesetzt.

Die Erfindung ist anhand von in der Zeichnung dargestellten Ausführungsbeispielen im folgenden näher beschrieben. Dabei zeigen:
- Fig. 1: eine Seitenansicht eines Fahrzeugsitzes für einen Personenkraftwagen mit Verstellvorrichtungen zur Sitzeinstellung,
- Fig. 2: ausschnittweise eine Draufsicht einer Betätigungseinheit in einer Verstellvorrichtung zur Sitzverstellung,
- Fig. 3 und 4: jeweils eine gleiche Darstellung wie in Fig. 2 in zwei gegensinnigen Schwenkstellungen der Betätigungseinheit,
- Fig. 5: ausschnittweise eine Draufsicht einer Betätigungseinheit in einer Verstellvorrichtung zum Ausführen zweier verschiedener Sitzverstellungen,
- Fig. 6: eine Seitenansicht der Betätigungseinheit in Richtung Pfeil VI in Fig. 5,
- Fig. 7 und 8: jeweils eine gleiche Darstellung wie in Fig. 5 und 6 gemäß einem zweiten Ausführungsbeispiel der Betätigungseinheit,
- Fig. 9 und 10: jeweils eine gleiche Darstellung wie in Fig. 5 und 6 gemäß einem dritten Ausführungsbeispiel der Betätigungseinheit,
- Fig.11: eine gleiche Darstellung wie in Fig. 5 gemäß einem vierten Ausführungsbeispiel der Betätigungseinheit,
- Fig.12: einen Schnitt längs der Linie XII-XII in Fig. 11,
- Fig.13 bis 17: jeweils eine Draufsicht eines Getriebes in einer der Verstellvorrichtungen in Fig. 1 zur Sitzeinstellung gemäß fünf verschiedener Ausführungsbeispiele,
- Fig.18: eine Draufsicht eines Getriebes in einer der Verstellvorrichtungen zur Sitzeinstellung in Fig. 1 gemäß einem sechsten Ausführungsbeispiel,
- Fig.19 bis 21: jeweils einen Schnitt längs der Linie IXX - IXX bzw. XX - XX bzw. XXI - XXI in Fig. 19,
- Fig.22: eine gleiche Darstellung wie in Fig. 18 gemäß einem modifizierten Ausführungsbeispiel,
- Fig.23 bis 25: jeweils einen Schnitt längs der Linie XXIII - XIII bzw. XXIV - XXIV bzw. XXV - XXV in Fig. 22,
- Fig.26: ausschnittweise eine Draufsicht einer Verstellvorrichtung gemäß einem weiteren Ausführungsbeispiel.

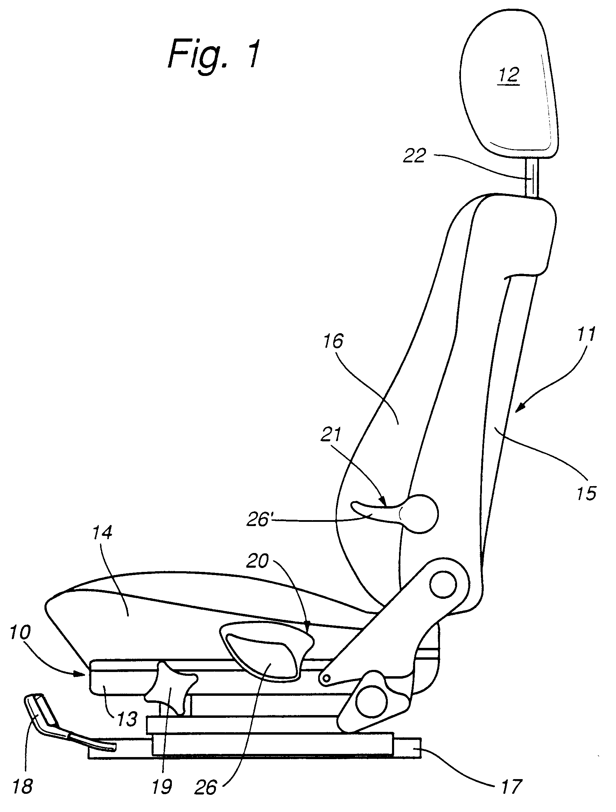

Der in Fig. 1 in Seitenansicht dargestellte Fahrzeugsitz für einen Personenkraftwagen weist in bekannter Weise ein Sitzteil 10, eine Rückenlehne 11, deren Neigung relativ zum Sitzteil 10 einstellbar ist, und eine an der Rückenlehne 11 gehaltene Kopfstütze 12 auf. Das Sitzteil 10 besteht aus einem Sitzrahmen 13 mit darauf befestigtem Sitzkissen 14. Am Sitzrahmen 13 ist der Lehnenrahmen 15 der Rückenlehne 11 mit darauf befestigtem Lehnenpolster 16 um eine quer zur Fahrzeuglängsachse verlaufende Schwenkachse schwenkbar gehalten. Der Sitzrahmen 13 ist in am Fahrzeugboden befestigten Halteschienen 17 gehalten und in Fahrzeugslängsrichtung verschiebbar. Am Fahrzeugsitz sind mehrere Verstellvorrichtungen vorgesehen, mittels welcher verschiedene Einstellfunktionen am Fahrzeugsitz durchführbar sind. Mit dem Arretierhebel 18 ist eine Verriegelung zwischen Sitzrahmen 13 und Halteschiene 17 zur Längsverschiebung des Sitzrahmens 13 lösbar und nach Sitzeinstellung wieder herstellbar. Mittels des Handrades 19 läßt sich die Vorderkante des Sitzteils 10 anheben und absenken, so daß das Sitzkissen in seiner Neigung einstellbar ist. Mit der Verstellvorrichtung 20 ist das Sitzteil 10 in seiner Höhenposition und ggf. hinsichtlich seiner Sitztiefe einstellbar, und mit der Verstellvorrichtung 21 ist die Neigung der Rückenlehne 11 relativ zum Sitzteil 10 und zusätzlich die Höhe der Kopfstütze 12 einstellbar. Hierzu ist die Kopfstütze 12 an mindestens einer Führungsstange 22 befestigt, die im Lehnenrahmen 15 axial verschieblich geführt ist.

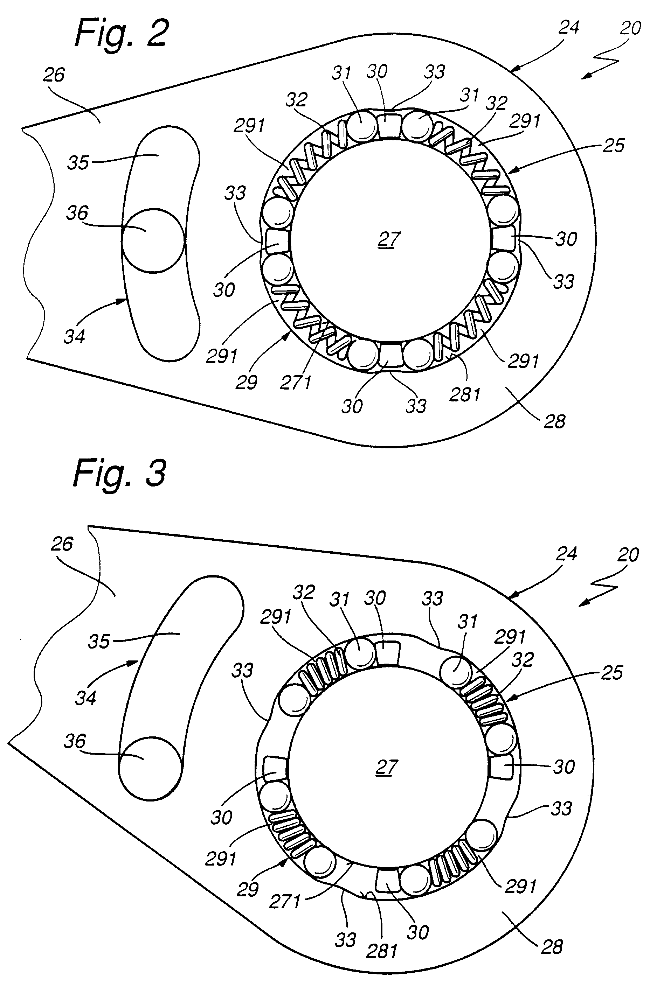

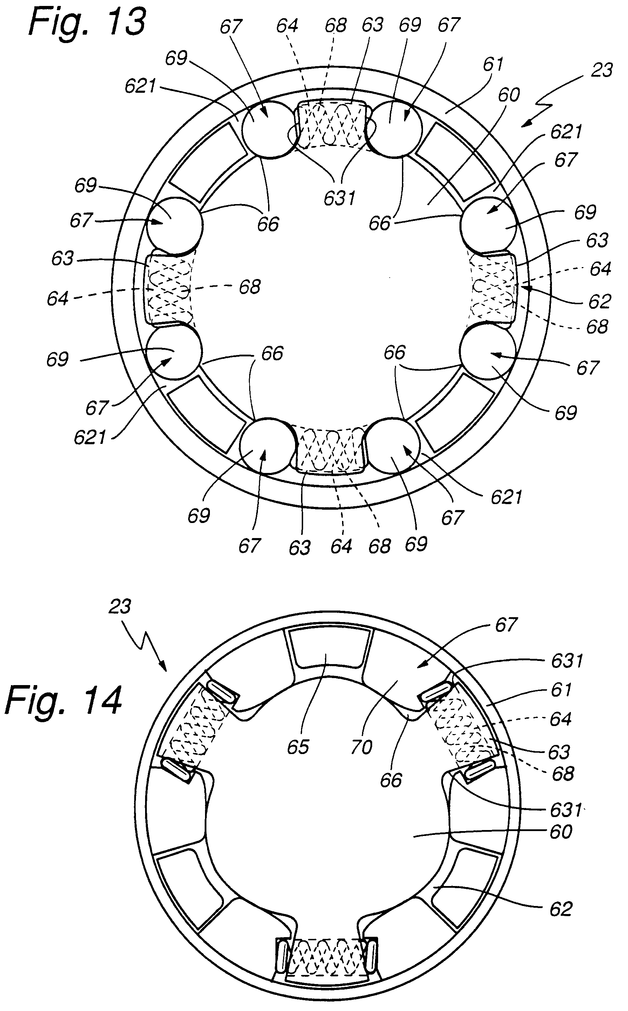

Die Verstellvorrichtung 20 weist ein Getriebe 23 zur Übertragung einer antriebsseitigen Drehbewegung in eine abtriebsseitige Verstellbewegung auf, das mit Freilauf und Hemmung derart ausgestattet ist, daß bei Kraftfluß vom Antrieb zum Abtrieb das Getriebe 23 in entgegengesetzten Drehrichtungen frei drehbar ist und bei Umkehrung des Kraftflusses sperrt. Der Antrieb ist mit einer Betätigungseinheit 24 (Fig. 2 - 4) gekoppelt, die am Antrieb eine Drehbewegung entsprechend einer an ihr vorgenommenen Handbetätigung durchführt. Das Getriebe 23 sorgt für eine stufenlose oder feinstufige Einstellung des Sitzteils 10 in der Höhe und arretiert gleichzeitig das Sitzteil 10 in der eingestellten Höhenposition zuverlässig, so daß die eingestellte Position weder durch Schwingungen auf schlechten Wegstrecken noch bei Crash sich selbsttätig verändert. Ausführungsbeispiele des Getriebes 23 sind in Fig. 13 - 25 dargestellt, auf die noch später im einzelnen eingegangen wird.

Die Betätigungseinheit 24 weist ein mit dem Antrieb des Getriebes 23 verbundenes Schrittschaltwerk 25 und einen manuell zu bedienenden Schwenkhebel 26 zum wiederholbaren Auslösen eines Schaltschrittes des Schrittschaltwerks 25 auf. Mit jedem Schaltschritt wird der Antrieb um einen maximalen Drehweg gedreht. Innerhalb des maximalen Schaltschrittes kann der Antrieb stufenlos um jeden möglichen Drehwinkel gedreht werden. Die Betätigungseinheit 24, von welcher in Fig. 1 nur der Handschwenkhebel 26 zu sehen, ist in Fig. 2 - 4 im einzelnen ausschnittweise dargestellt. Das stufenlose Schrittschaltwerk 25 weist ein mit dem Antrieb des Getriebes 23 drehfest verbundenes Innenteil 27 mit zylindrischer Außenfläche 271 und ein mit dem Schwenkhebel 26 drehfestes Außenteil 28 mit zylindrischer Innenfläche 281 auf. Das Außenteil 28 ist hier einstückig mit dem Schwenkhebel 26 ausgebildet. Seine Innenfläche 281 umschließt konzentrisch das Innenteil 27, wobei zwischen der Außenfläche 271 des Innenteils 27 und der Innenfläche 281 des Außenteils 28 ein Ringraum 29 verbleibt. In dem Ringraum 29 sind vier um jeweils 90° Umfangswinkel zueinander versetzt angeordnete Anschläge 30 räumlich feststehend angeordnet. Weiterhin liegen im Ringraum 29 Klemmkörper 31 ein, die hier als Rollen oder Walzen oder als Kugeln ausgebildet sind. In dem Ringraumabschnitt 291 zwischen jeweils zwei Anschlägen 30 sind immer zwei Klemmkörper 31 angeordnet, die von einer ebenfalls im Ringraumabschnitt 291 einliegenden, sich in Umfangsrichtung erstreckenden Druckfeder 32 gegen die einander zugekehrten Stirnflächen der Anschläge 301 gedrückt werden. Durch die insgesamt vier vorhandenen Anschläge 30 ist der Ringraum 29 somit in vier Ringraumabschnitte 291 unterteilt, in denen in der beschriebenen Weise ingesamt acht Klemmkörper 31 einliegen, die von insgesamt vier Druckfedern 32 gegen Stirnflächen der vier Anschläge 30 gepreßt werden. Die Klemmkörper 31 rollen sich auf der Außenfläche 271 des Innenteils 27 und auf der Innenfläche 281 des Außenteils 28 ab, so daß der mit dem Außenteil 28 einstückige Schwenkhebel 26 auf dem Innenteil 27 drehbar gelagert ist. Die Innenfläche 281 des Außenteils 28 trägt insgesamt vier Axialrippen 33, die sich leicht bogenförmig von der Innenfläche 281 in den Ringraum 29 hinein vorwölben und dadurch eine Verengung des Ringraumquerschnittes erzeugen. Die vier Axialrippen 33 sind um 90° Umfangswinkel zueinander versetzt derart angeordnet, daß sie in der in Fig. 2 gezeigten Nullage oder Grundstellung des Schwenkhebels 26 den Anschlägen 30 radial gegenüberliegen. Alternativ hierzu ist es möglich, die Axialrippen 33 auch an der Außenfläche 271 des Innenteils 27 anzuordnen. Selbstverständlich kann auch die Anzahl der Anschläge 30 und damit die Zahl der Klemmkörper 31 und Druckfedern 32 variiert werden. Die Anzahl der Axialrippen 33 ist aber immer gleich der der Anschläge 30.

Die beschriebene Betätigungseinheit 24 arbeitet wie folgt:

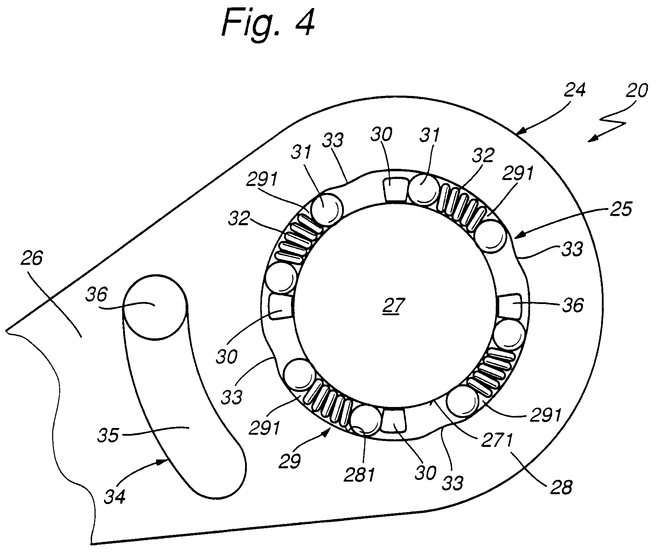

Soll die Position des Sitzteils 10 in Vertikalrichtung nach oben oder unten verstellt werden, so ist der Handschwenkhebel 26 in der Zeichnung im Uhrzeigersinn (Fig. 3) bzw. entgegen Uhrzeigersinn (Fig. 4) zu schwenken, je nachdem, ob das Sitzteil 10 nach oben bewegt oder abgesenkt werden soll. Bereits nach kurzem Schwenkweg des Schwenkhebels 26 und damit des Außenteils 28 führen die Axialrippen 33 über die Klemmkörper 31 zu einem Verspannen des Außenteils 28 mit dem Innenteil 27. Letzteres wird mitbewegt und verdreht den Antrieb des Getriebes 23, dessen Abtrieb seinerseits eine Verstellbewegung des Sitzteils 10 in die gewünschte Richtung durchführt. Der maximale Schwenkweg des Schwenkhebels 26 ist erreicht, wenn die Druckfedern 32 auf Blocklänge gestaucht sind. Wird nunmehr der Schwenkhebel 26 freigegeben oder rückgeführt, so bewirken die Druckfedern 32 das selbsttätige Einstellen der Nullage des Schwenkhebels 26. In Fig. 3 sind Schwenkhebel 26 und Schrittschaltwerk 25 in ihrer maximalen Schwenkstellung im Uhrzeigersinn und in Fig. 4 in ihrer maximalen Schwenkstellung entgegen Uhrzeigersinn dargestellt. In Fig. 2 nehmen Schrittschaltwerk 25 und Schwenkhebel 26 ihre Nullage ein. Ist die bei einer Schwenkhebelbetätigung erfolgte Einstellung der Sitzhöhe nicht ausreichend, so kann diese durch erneutes Betätigen des Schwenkhebels 26 weiter verändert werden. Innerhalb des maximalen Schwenkweges des Schwenkhebels 26 kann das Innenteil 27 und mit diesem der Antrieb des Getriebes 23 um jeden beliebigen Drehwinkel verdreht werden, wodurch eine stufenlose Einstellung der Sitzhöhe möglich ist. Mit Freigeben des Schwenkhebels 26 sorgt das Getriebe 23 durch seine Arretierfunktion dafür, daß die mit dem Schwenkhebel 26 vorgenommene Einstellung der Höhenposition des Sitzteils 10 unverändert beibehalten wird. Ist das mit dem Abtrieb des Getriebes 23 gekoppelte Verstellorgansystem zur Einstellung der Sitzhöhe des Sitzteils 10 mit einer ausreichend großen Selbsthemmung versehen, so könnte auf das Getriebe 23 verzichtet werden und das Innenteil 27 des Schrittschaltwerks 25 unmittelbar mit einem Verstellorgan des Verstellorgansystems gekoppelt werden. Zu einer zuverlässigen Sicherung der Einstellposition auch im Crashfall oder auf extrem schlechten Wegstrecken, wird jedoch bevorzugt das Getriebe 23 zwischen Schrittschaltwerk 25 und Verstellorgansystem angeordnet.

Die Endlage des Schwenkhebels 26 in der Betätigungseinheit 24 kann durch eine Langlochführung 34 fixiert werden, wie sie in Fig. 2 - 4 dargestellt ist. Eine solche Endlagenfixierung reduziert den Verschleiß an den Klemmkörpern 31 und an den Druckfedern 32 bei Auftreten von relativ großen Angriffskräften am Schwenkhebel 26. Die Langlochführung 34 weist ein im Schwenkhebel 26 bzw. im Außenteil 28 angeordnetes bogenförmiges Langloch 35 auf, das auf einem zur Schwenkachse des Schwenkhebels 26 konzentrischen Kreis angeordnet ist. In das Langloch 35 greift ein räumlich feststehend angeordneter Stift 36 hinein, der durch Anschlag an den abgerundeten Enden des Langlochs 35 die maximale Schwenkbewegung des Schwenkhebels 26 festlegt. Die bogenförmige Länge des Langlochs 35 ist so gewählt, daß der Stift 36 zur Anlage kommt, wenn die Druckfedern 32 gerade auf Blocklänge gestaucht sind. In der Nullage des Schwenkhebels 26 ist der Stift 36 im Langloch 35 mittig plaziert.

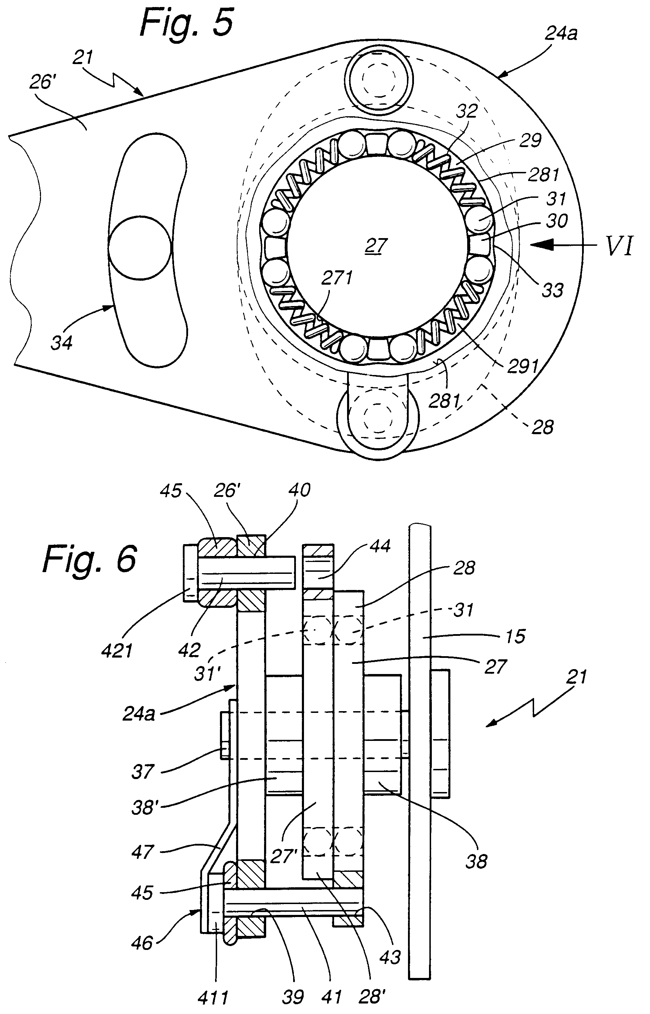

Die Verstellvorrichtung 21 zur Durchführung zweier Verstellfunktionen am Fahrzeugsitz weist für jede Verstellfunktion ein separates Getriebe 23 mit Freilauf und Hemmung auf, wie dies vorstehend bereits erwähnt worden ist und in Verbindung mit Fig. 13 bis 25 noch nachfolgend im Detail beschrieben wird. In gleicher Weise wie die Verstellvorrichtung 20 hat auch die Verstellvorrichtung 21 eine in Fig. 5 und 6 dargestellte Betätigungseinheit 24a mit einem an der Außenseite der Rückenlehne 11 gut zugänglichen Schwenkhebel 26' zur manuellen Bedienung und hier entsprechend der Durchführung von zwei Verstellfunktionen mit zwei identisch ausgebildeten Schrittschaltwerken 25 und 25'. Die beiden Schrittschaltwerke 25,25' sind identisch dem vorstehend beschriebenen Schrittschaltwerk 25 gemäß Fig. 2 - 4 aufgebaut, so daß auf die Beschreibung für diese Fig. Bezug genommen wird und gleiche Bauteile mit gleichen Bezugszeichen versehen sind. In Abkehr von der Betätigungseinheit 24 in Fig. 2 - 4 ist bei der Betätigungseinheit 24a der Schwenkhebel 26' nicht einstückig mit den Außenteilen 28 der Schrittschaltwerke 25,25' sondern als separates Bauteil ausgeführt, der wahlweise mit einem der Außenteile 28 bzw. 28' der beiden Schrittschaltwerke 25,25' koppelbar ist. Entsprechend der Kopplung des Schwenkhebels 26' mit dem Schrittschaltwerk 25 oder dem Schrittschaltwerk 25' wird die eine Verstellfunktion, z.B. die Lehnenneigung, oder die andere Verstellfunktion, z.B. die Kopfstützenhöheneinstellung, vorgenommen. Nach Beendigung der Sitzeinstellung ist der Schwenkhebel 26' von den beiden Schrittschaltwerken 25,25' entkoppelt, und die vorgenommene Einstellung wird durch die Arretierfunktion des jeweils zwischen dem Schrittschaltwerk 25 bzw. 25' und dem zugeordneten Verstellorgansystem eingeschalteten Getriebes 23 zuverlässig arretiert.

Wie aus Fig. 6 hervorgeht, sind die beiden Schrittschaltwerke 25 und 25' mit ihrem Innenteil 27 und 27' und ihrem Außenteil 28 und 28' unmittelbar nebeneinander angeordnet, wobei die Innenteile 27 und 27' auf einem im Lehnenrahmen 15 gehaltenen Zapfen 37 drehbar angeordnet sind. Mit jedem Innenteil 27,27' ist ein Ritzel 38,38' drehfest verbunden, welches die Drehbewegung des Innenteils 27,27' entweder direkt auf das Verstellorgan des Verstellsystems (unter der Voraussetzung, daß dieses eine Selbsthemmung aufweist) oder bevorzugt zum Antrieb des Getriebes 23 überträgt.

Zur wahlweisen Kopplung des ebenfalls auf dem Zapfen 37 schwenkbar gelagerten Schwenkhebel 26' sind in diesem zwei Durchgangsbohrungen 39,40 vorgesehen, die auf einem zum Zapfen 37 koaxialen Lochkreis einander diametral gegenüberliegend angeordnet sind. In jeder Durchgangsbohrung 39,40 ist ein Mitnehmerstift 41 bzw. 42 axial verschieblich aufgenommen. Korrespondierend zu dem Mitnehmerstift 41,42 sind in jedem Außenteil 28 und 28' eine axiale Aufnahme 43,44 für jeweils einen Mitnehmerstift 41,42 vorgesehen. Bei den hier als Scheiben ausgebildeten Außenteilen 28,28' sind die Aufnahmen 43,44 jeweils durch eine axiale Bohrung in dem Außenteil 28 und 28' realisiert. Die Aufnahmen 43,44 sind so angeordnet, daß in der Nullage der Schrittschaltwerke 25,25' die Aufnahme 43 im Außenteil 28 mit dem Mitnehmerstift 41 und die Aufnahme 44 im Außenteil 28' mit dem Mitnehmerstift 42 fluchtet. Zwischen einem stirnseitigen Kopf 411,421 der Mitnehmerstifte 41,42 und der Oberfläche des Schwenkhebels 26 stützen sich jeweils federelastische Rückstellelemente 45, z.B. Gummipuffer ab, welche die Mitnehmerstifte 41,42 außer Eingriff mit den zugeordneten Aufnahmen 43,44 halten, also die Entriegelung zwischen Schwenkhebel dem 26' und den beiden Schrittschaltwerken 25,25' sicherstellen. Soll das Schtrittschaltwerk 25 mit dem Schwenkhebel 26' gekoppelt werden, so wird der Mitnehmerstift 41 unter Zusammenpressen des Rückstellelements 45 verschoben, so daß er in die Aufnahme 43 im Außenteil 28 des Schrittschaltwerks 25 formschlüssig eindringt. Danach wird ein Verriegelungsglied 46, daß hier als ein auf dem Zapfen 37 schwenkbar gelagertes gekröpftes Federblech 47 ausgeführt ist, über den Kopf 411 des Mitnehmerstifts 41 geschwenkt, so daß ein Rückstellen des Mitnehmerstifts 41 durch das Rückstellelement 45 verhindert ist. Der Schwenkhebel 26' ist mit dem Schriftschaltwerk 25 drehfest verbunden, wie dies im unteren Teil der Fig. 6 dargestellt ist, und durch Schwenken des Schwenkhebels 26' in der eingangs beschriebenen Weise wird über das Schrittschaltwerk 25 das Ritzel 38 gedreht. Nach Beendigung der Sitzeinstellung über das Schrittschaltwerk 25 wird das Federblech 47 wieder vom Mitnehmerstift 41 abgeschwenkt, und das Rückstellelement 45 sorgt durch Zurückschieben des Mitnehmerstifts 41 durch eine automatische Entriegelung. Wird in gleicher Weise durch Betätigen des Mitnehmerstifts 42 der Schwenkhebel 26' mit dem Schrittschaltwerk 25' gekoppelt, so kann mit dem Schwenkhebel 26' die andere Sitzeinstellung durchgeführt werden.

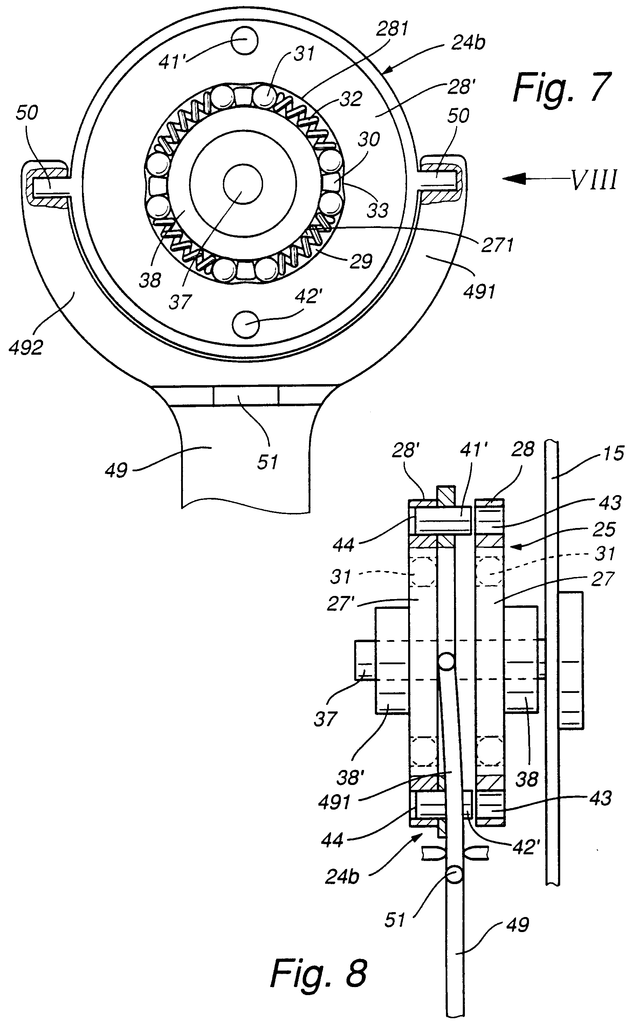

Die in Fig. 7 und 8 dargestellte Betätigungseinheit 24b als weiteres Ausführungsbeispiel unterscheidet sich von der vorstehend beschriebenen Betätigungseinheit 24a dadurch, daß der Schwenkhebel 26' zwischen den beiden Schrittschaltwerken 25 und 25' angeordnet und auf dem Zapfen 37 sowohl drehbar als auch axial verschieblich gehalten ist. Der Schwenkhebel 26' weist zwei einander diametral gegenüberliegende Mitnehmerstifte 41' und 42' auf, die fest im Schwenkhebel 26' angeordnet sind und auf beiden Stirnseiten des Schwenkhebels 26' axial vorstehen. In Zuordnung zu den Mitnehmerstiften 41' und 42' tragen jede der beiden Außenteile 28 und 28' der beiden Schrittschaltwerke 25 und 25' zwei diametral einander gegenüberliegende Aufnahmen 43 bzw. 44 zum formschlüssigen Einschieben der Mitnehmerstifte 41' und 42' bei der axialen Verschiebung des Schwenkhebels 26'. Im übrigen ist der Aufbau und die Wirkungsweise der Betätigungseinheit 24b identisch mit der vorstehend beschriebenen Betätigungseinheit 24a, so daß gleiche Bauelemente mit gleichen Bezugszeichen versehen sind.

Wie aus Fig. 7 und 8 ersichtlich ist, kann der Schwenkhebel 26' zweiteilig ausgeführt werden und aus einem Kupplungsring 48 und aus einem Gabelhebel 49 bestehen. Der Kupplungsring 48 trägt an seinem Umfang zwei diametral einander gegenüberliegende, jeweils radial vom Kupplungsring 48 wegstehende Zapfen 50, auf welchen der Gabelhebel 49 mit seinen den Kupplungsring 48 über etwa 180° umgreifenden beiden Gabelschenkeln 491,492 schwenkbar gehalten ist. Der Gabelhebel 49 kann in seiner Nullage um einen im Abstand von den Zapfen 50 angeordneten Schwenkpunkt 51 geschwenkt werden, so daß durch Querbewegung des Gabelhebels 49, und zwar quer zu seiner Schwenkbewegung zwecks Erzielung einer Verstellfunktion, der Kupplungsring 48 zu dem einen oder anderen Schrittschaltwerk 25 bzw. 25' hin verschoben wird und die Mitnehmerstifte 41',42' in die entsprechenden Aufnahmen 43 bzw. 44 zur drehfesten Mitnahmen der Außenteile 28 bzw. 28' eintauchen.

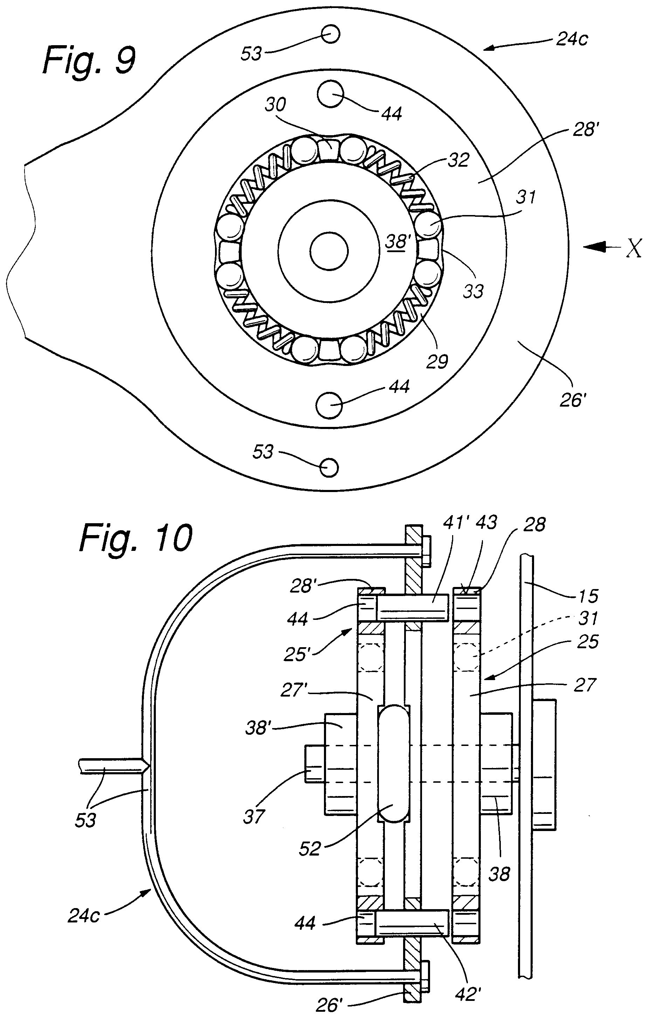

Bei der in Fig. 9 und 10 dargestellten Betätigungsvorrichtung 24c ist ebenso wie bei der Betätigungsvorrichtung 24b in Fig. 7 und 8 der Schwenkhebel 26' axial verschieblich auf dem Zapfen 37 zwischen den beiden Schrittschaltwerken 25 und 25' angeordnet. Der Schwenkhebel 26' weist wiederum zwei diametral gegenüberliegend angeordnete Mitnehmerstifte 41' und 42' auf, die feststehend auf beiden Stirnseiten des Schwenkhebels 26' axial vorstehen. Ein federelastisches Rückstellglied 52, das hier als Gummipuffer ausgebildet ist, hält den Schwenkhebel 26' über seine in die Aufnahmen 43 im Außenteil 28 des Schrittschaltwerks 25 eingreifenden Mitnehmerstifte 41',42' im ständigen Eingriff mit dem Schrittschaltwerk 25. Die Aufhebung der Verriegelung des Schwenkhebels 26' mit dem Schrittschaltwerk 25 und die Verriegelung des Schwenkhebels 26 mit dem Schrittschaltwerk 25' erfolgt über einen Seilzug 53, der an diametral gegenüberliegenden Stellen des Schwenkhebels 26' befestigt ist. Durch Aufbringen einer Zugkraft am Seilzug 53 wird der Schwenkhebel 26' entgegen der Kraft des Rückstellgliedes 52 axial auf dem Zapfen 37 verschoben, wobei die Mitnehmerstifte 41' und 42' aus den Aufnahmen 43 im Außenteil 28 herausgleiten und sich in die Aufnahmen 44 im Außenteil 28' des Schrittschaltwerks 25' einschieben. Im übrigen ist der Aufbau und die Wirkungsweise der Betätigungseinheit 24c identisch mit der zu Fig. 7 und 8 beschriebenen Betätigungseinheit 24b, so daß gleiche Bauteile mit gleichen Bezugszeichen versehen sind.

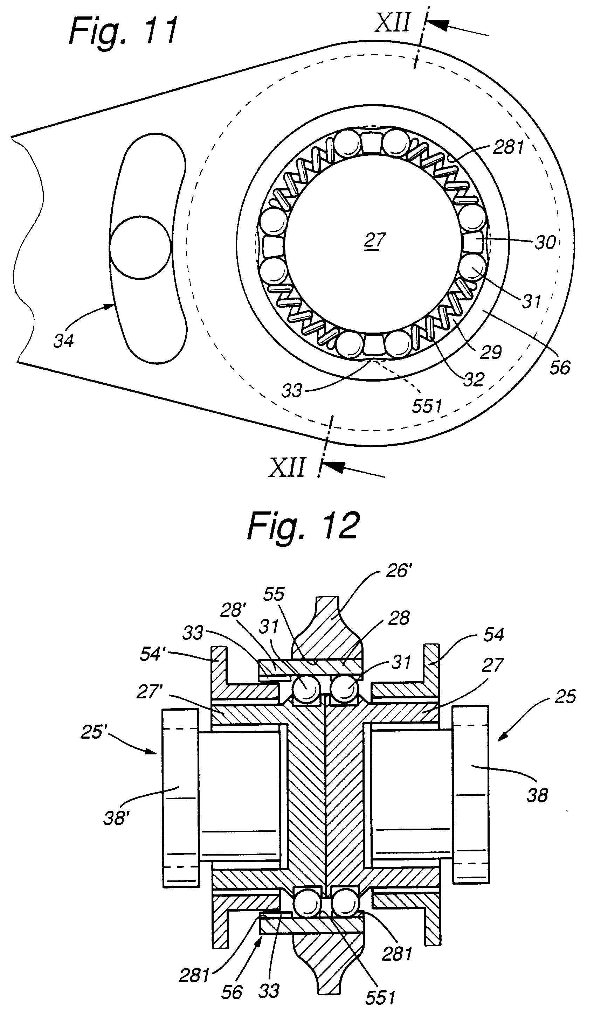

Bei der in Fig. 11 und 12 skizzierten Betätigungseinheit 24d sind die beiden Schaltwerke 25,25' unmittelbar nebeneinander angeordnet und die jeweiligen Innenteile 27,27' mit daran befestigten Ritzeln 38,38' drehbar in lehnenrahmenseitigen Buchsen 54 und 54' gehalten. Die beiden Außenteile 28 und 28' der beiden Schaltwerke 25 und 25' sind in zueinander kongruenter Ausrichtung zusammen mit einem mittigen Zwischenring 55 zu einer Schaltbuchse 56 vereinigt, die drehfest mit dem Schwenkhebel 26' verbunden ist. Der Zwischenring 55 unterscheidet sich in seiner Ausbildung von den Außenteilen 28 und 28' dadurch, daß an seiner inneren Ringfläche 551, anders als an den Innenflächen 281 der Außenteile 28 bzw. 28', die Axialrippen 33 fehlen. Dadurch können die Klemmkörper 31, die hier als Kugeln ausgebildet sind, im Bereich des Zwischenrings 55 sich nicht zwischen der Ringfläche 551 des Zwischenrings 55 und der Außenfläche 271 der beiden Innenteile 27,27' verklemmen, und zwischen dem Zwischenring 55 und den Innenteilen 27,27' herrscht stets Freilauf. Die Schaltbuchse 56 ist axial verschieblich zu den Innenteilen 27,27' angeordnet und derart ausgebildet, daß in jeder axialen Verschiebestellung der Schaltbuchse 56 jeweils der Zwischenring 55 die Klemmkörper 31 eines Schaltwerks 25 bzw. 25' übergreift. Dadurch ist stets ein Außenteil 28 bzw. 28' mit dem Innenteil 27 bzw. 27' des gleichen Schaltwerks 25 bzw. 25' über die Klemmkörper 31 verkeilt, während der Zwischenring 55 über den Klemmkörpern 31 des anderen Schaltgetriebes 25' bzw. 25 steht und sich über die Klemmkörper 31, die hier als Kugellager wirken, auf dem Innenteil 27' bzw. 27 abrollt. Damit ist der Schwenkhebel 26' je nach Verschiebestellung der Schaltbuchse 56 mit einem der beiden Schaltwerke 25 bzw. 25' gekoppelt, in der Darstellung in Fig. 12 mit dem Schrittschaltwerk 25. Zur Kopplung des Schwenkhebels 26' mit dem Schrittschaltwerk 25' ist die Schaltbuchse 56 in Fig. 12 nach rechts zu verschieben. Die Schaltbuchse 56 ist einstückig und entsprechend den beiden Außenteilen 28,28' mit durchgehenden Axialrippen 33 ausgebildet, wobei die Ringfläche 551 des Zwischenrings 55 durch mittigen Freistich der Axialrippen 33 gewonnen wird. Die Wirkungsweise der Betätigungseinheit 24d ist im übrigen wie die der vorstehend beschriebenen Betätigungseinheiten 24a - 24c, so daß insoweit auf die vorstehenden Ausführungen verwiesen wird.

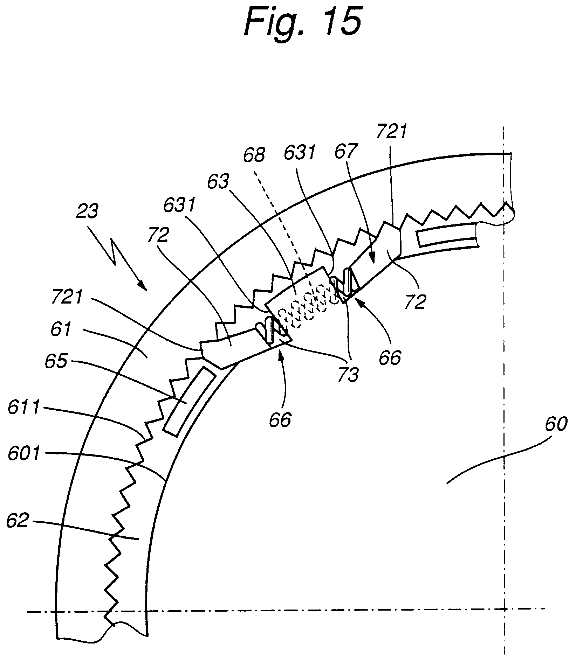

In Fig. 13 bis 25 sind verschiedene Ausführungsbeispiele des bereits angesprochenen Getriebes 23 mit Freilauf und Hemmung dargestellt, mit welchen - ausgenommen Fig. 15 - eine stufenlose Verstellung und Arretierung der Sitzeinstellung möglich ist. Das Getriebe 23 ist bei Kraftfluß vom Antrieb zum Abtrieb in entgegengesetzten Drehrichtungen frei drehbar, während es bei Umkehrung des Kraftflusses, also bei Kraftfluß vom Abtrieb zum Antrieb, sperrt und damit eine Änderung der vorgenommenen Sitzeinstellung zuverlässig verhindert.

Das in Fig. 13 dargestellte Getriebe 23 weist eine abtriebsseitige, mit einem Verstellorgan am Fahrzeugsitz drehfest verbundene Innenwelle 60 und ein feststehendes Gehäuse 61 auf, das mit einer zylindrischen Gehäuseinnenwand 611 unter Belassung eines Ringspalts 62 zu dem Außenmantel 601 der Innenwelle 60 letztere konzentrisch umschließt. Die Innenwelle 60 trägt vier um gleiche Umfangswinkel zueinander versetzt angeordnete, in den Ringspalt 62 radial hineinragende Radialvorsprünge 63, die mit jeweils einer in Umfangsrichtung verlaufenden Durchgangsbohrung 64 versehen sind. Durch die vier Radialvorsprünge 63 werden im Ringspalt 62 insgesamt vier Ringspaltabschnitte 621 gebildet, in welche jeweils ein antriebsseitiger Mitnehmer 65 axial hineinragt. In Verbindung mit den in Fig. 2 - 12 beschriebenen Betätigungseinheiten 24 und 24a - 24d sind die vier Mitnehmer 66 jeweils fest mit dem Innenteil 27 bzw. 27' der Schrittschaltwerke 25 bzw. 25' verbunden. Im Außenmantel 601 der Innenwelle 60 sind jeweils anschließend an die Radialflanken 631 der Radialvorsprünge 63 Vertiefungen 66 eingebracht, in welchen jeweils ein Klemmkörper 67 einliegt, der im Ausführungsbeispiel der Fig. 13 als Walze oder Kugel 69 ausgebildet ist. Die Vertiefungen 66 sind so ausgebildet, daß in ihnen der Klemmkörper 67 sich zwischen der Innenwand 611 des Gehäuses 61 und dem Grund der Vertiefungen 66 abrollen kann. Zu der von den Radialflanken 631 der Radialvorsprünge 63 abgekehrten Seite hin nehmen die Vertiefungen 66 in ihrer radialen Tiefe ab und gehen schließlich stetig in den Außenmantel 601 der Innewelle 60 über. Bei den vier vorhandenen Radialvorsprünge 63 sind damit im Außenmantel 601 der Innenwelle 60 insgesamt acht Vertiefungen 66 vorhanden, in welchen insgesamt acht Klemmkörper 67 einliegen. Die Anzahl der Radialvorsprünge 63 und damit die Anzahl der Mitnehmer 65 und der Vertiefungen 66 und Klemmkörper 67 ist frei wählbar. In den Durchgangsbohrungen 64 der Radialvorsprünge 63 liegen jeweils Schraubendruckfedern 68 ein, welche sich jeweils an den beiden klemmkörpern 67 abstützen, die in den beidseitig der Radialvorsprünge 63 sich anschließenden Vertiefungen 66 einliegen, und diese in den Vertiefungen 66 soweit verschieben, daß die Klemmkörper 67 sich zwischen der Innenwelle 60 und dem Gehäuse 61 verklemmen und damit diese beiden Teile drehfest miteinander verbinden. Die insgesamt vier antriebsseitigen Mitnehmer 65 ragen in den Raum zwischen den beiden innerhalb eines Ringspaltabschnittes 621 liegenden Klemmkörpern 67 hinein und sind so dimensioniert, daß sie in Umfangsrichtung einen nur geringen Abstand zu den durch die Schraubendruckfedern 68 verkeilten Klemmkörpern 67 einhalten.

Wird von dem Fahrzeugsitz ein Bewegungsimpuls auf die Innenwelle 60 eingeleitet, so führt eine geringfügige Drehbewegung der Innenwelle 60 zu einem weiteren Verkeilen der Klemmkörper 67 am Gehäuse 61 und damit zur erhöhter Arretierung. Damit ist ein Verstellen der Sitzposition bei Crash oder durch Schwingungen auf extrem schlechten Wegstrecken zuverlässig ausgeschlossen. Ein Verstellen des Getriebes 23 kann nur über die Mitnehmer 65 erfolgen. Beim Drehen der Mitnehmer 65 drücken diese die Klemmkörper 67 gegen die Kraft der Schraubendruckfedern 68 aus deren Sperrposition heraus bis zur Anlage an der einen Radialflanke 631 der Radialvorsprünge 63. Über diese Radialvorsprünge 63 wird nun die Innenwelle 60 um den gewünschten Verstellweg mitgenommen. Dieser Verstellvorgang erfolgt in beiden Drehrichtungen der Mitnehmer 65 in gleicher Weise. Erfolgt keine Verstellbewegung der Mitnehmer 65, so werden die Klemmkörper 67 von den Schraubendruckfedern 68 wieder in ihre Klemmposition eingeschoben und arretieren die Innenwelle 60 in der neuen Einstellposition.

Das in Fig. 14 dargestellte Getriebe 23 unterscheidet sich von dem vorstehend beschriebenen Getriebe 23 nur dadurch, daß die Klemmkörper 67 als Klemmstücke 70 mit trapezförmigem Querschnitt ausgebildet sind, wobei die an der Innenwand 611 des Gehäuses 61 und am Außenmantel 601 der Innenwelle 60 anliegenden Querschnittskanten bogenförmig konvex geformt sind. Die Vertiefungen 66 sind asymmetrisch gestaltet, wobei deren größte Tiefe unmittelbar an den Radialschultern 631 der Radialvorsprünge 63 vorhanden ist.

Bei dem in Fig. 15 ausschnittweise dargestellten Getriebe 23 ist die Innenwand 611 des feststehenden Gehäuses 61 mit einer flachen, feinstufigen Innenverzahnung 71 versehen und die Klemmkörper 67 als Fünfeckprismen 72 ausgebildt. Die Vertiefungen 66 sind als asymmetrische, im Querschnitt etwa sägezahnförmige Längsnuten 73 ausgeführt, deren größte Tiefe am Fuße der Radialschultern 631 der Radialvorsprünge 63 liegt. Die Innenverzahnung 71 und die dieser zugekehrten Prismenfläche 721 der auf dem Nutgrund der Längsnuten 73 verschiebbaren Fünfeckprismen 72 sind so aufeinander abgestimmt, daß die Fünfeckprismen 72 von den Schraubendruckfedern 68 formschlüssig in die Innenverzahnung 71 eingeschoben werden. Die Funktion des Getriebes 23 ist identisch mit dem zu Fig. 13 beschriebenen Getriebe 23 mit dem Unterschied, daß das Verriegeln nicht mehr stufenlos, sondern in feinstufigen Schritten entsprechend der Ausführung der Innenverzahnung 71 erfolgt, wodurch ein besserer Formschluß und ein sicheres Verkeilen erzielt wird.

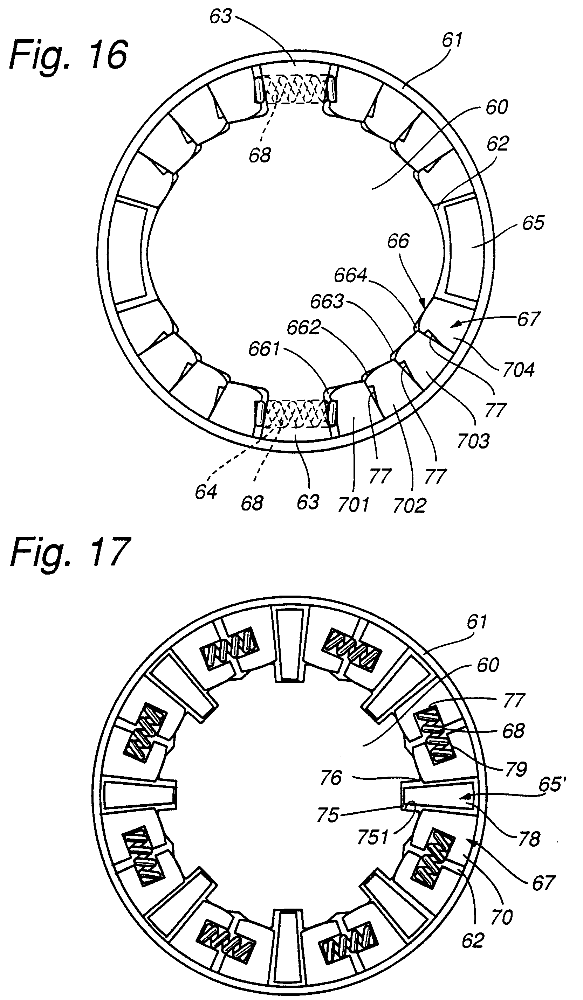

Das in Fig. 16 dargestellte Getriebe 23 weicht insoweit von den vorstehend beschriebenen Getrieben 23 ab, als die Innenwelle 60 nur zwei Radialvorsprünge 63 trägt, die an der Innenwelle 60 diametral angeordnet sind. Entsprechend ragen in den Ringspalt 62 zwischen Innenwelle 60 und feststehendem Gehäuse 61 nur zwei antriebsseitige axiale Mitnehmer 65 hinein. Die einander ebenfalls diametral gegenüberliegenden Mitnehmer 65 sind jeweils um 90° gegenüber den Radialvorsprüngen 63 versetzt. Zwischen den Radialschultern 631 der Radialvorsprünge 63 und den Mitnehmern 65 ist eine Mehrzahl von Einzelvertiefungen 661 - 664 vorgesehen. Zwischen einem Radialvorsprung 63 und einem Mitnehmer 65 sind hier jeweils vier Einzelvertiefungen 661 - 664 in den Außenmantel 601 der Innenwelle 60 eingebracht, wobei jede Einzelvertiefung 661 - 664 identisch ausgebildet ist wie die Vertiefungen 66 des Getriebes 23 in Fig. 14. Die Einzelvertiefungen 661 - 664 liegen in Umfangsrichtung unmittelbar einander, wobei lediglich die Einzelvertiefung 661 im Bereich ihrer größten Tiefe von der Radialschulter 631 des jeweiligen Radialvorsprungs 63 begrenzt ist. In jeder der Einzelvertiefungen 661 - 664 liegt ein Klemmkörper 67, hier ein trapezartiges Einzelklemmstück 701,702 ein, wie dies als Klemmstück 70 bereits zu Fig. 14 beschrieben ist. In den Durchgangsbohrungen 64 der beiden Radialvorsprünge 63 liegt wiederum jeweils eine Schraubendruckfeder 68 ein, die sich an den Stirnseiten der den Radialvorsprüngen 63 benachbarten Einzelklemmstücke 701 abstützen. Dadurch werden bei nichtbetätigten Mitnehmern 65 alle Einzelklemmstücke 701 - 704 in ihren Einzelvertiefungen 661 - 664 zwischen dem Grund der Einzelvertiefungen 661 - 664 und der Innenwand 611 des Gehäuses 61 verkeilt. Die beiden axialen Mitnehmer 65 halten wiederum einen nur geringen Abstand in Umfangsrichtung von den ihnen zugekehrten Einzelklemmstücken 704 ein. Um ein einwandfreies gegenseitiges Verschieben der Einzelklemmstücke 701 - 704 zu gewährleisten, weist jedes Einzelklemmstück 701 - 704 in seiner dem anliegenden Einzelklemmstück zugekehrten Radialfläche eine Einkerbung 74 auf. In die Einkerbungen 74 der den Radialvorsprüngen 63 zugekehrten Einzelklemmstücke 701 greifen die Schraubendruckfedern 68 stirnseitig ein.

Das in Fig. 17 dargestellte Getriebe 23 wird bevorzugt zur Übertragung großer Kräfte eingesetzt. Die Innenwelle 60 trägt hier keine in den Ringspalt 62 hinein vorspringende Radialvorsprünge, sondern weist eine Mehrzahl von um gleiche Umfangswinkel zueinander versetzt angeordnete Radialnuten 75 auf. Im Ausführungsbeispiel sind insgesamt acht Radialnuten 75 vorhanden, wobei die Zahl jedoch variiert werden kann. Zwischen den Radialnuten 75 sind am Außenmantel 601 der Innenwelle 60 jeweils zwei Erhebungen 76 angeformt, deren radiale Höhe jeweils zu einer Nutflanke 751 der Radialnuten 75 hin ansteigt. Im Ausführungsbeispiel trägt somit die Innenwelle insgesamt sechzehn Erhebungen 76, also doppelt so viele wie Radialnuten 75. Zwischen jeder Erhebung 76 und der Innenwand 611 des feststehenden Gehäuses 61 liegt ein Klemmkörper 67 ein, der hier wiederum als trapezartiges Klemmstück 70 ausgebildet ist. Die beiden zwischen zwei Radialnuten 75 angeordneten Klemmstücke 70 werden jeweils von einer zwischen ihnen sich abstützenden Schraubendruckfeder 68 in Richtung Radialnuten 75 hin verschoben, so daß sie sich zwischen den Erhebungen 76 und der Innenwand 611 des Gehäuses 61 verklemmen. Zur Aufnahme der Schraubendruckfedern 68 tragen die Klemmstücke 70 auf einander zugekehrten Radialflächen Aussparungen 77, in welchen die Schraubendruckfedern 68 geführt sind und sich am Grunde der Aussparungen 77 stirnseitig abstützen. Die Klemmstücke 70 sind so ausgebildet, daß sie etwas über die Nutflanken 751 der Radialnuten 75 vorstehen. In jeder Radialnut 75 greift ein antriebsseitiger Mitnehmer 65' ein, der so ausgebildet ist, daß er mit geringem Abstand zu den Nutflanken 751 der Radialnuten 75 liegt und über den Nutrand in den Bereich zwischen zwei Klemmkörpern 70 hineinragt. Im Ausführungsbeispiel der Fig. 17 sind die axialen Mitnehmer 65' als trapezförmige Stäbe 78 ausgebildet, die in Radialrichtung bis nahe dem Nutgrund der Radialnuten 75 und der Innenwand 611 des Gehäuses 61 reichen. Dadurch, daß die Klemmstücke 70 in ihrer Klemmstellung etwas über die Nutflanken 751 der Radialnuten 75 vorstehen, werden bei einer antriebsseitigen Drehbewegung der Mitnehmer 65' in dem einen oder anderen Drehsinn von diesen zunächst die Klemmstücke 70 entriegelt, bevor sie an der einen Nutflanke 751 der Radialnuten 75 zur Anlage kommen. Die Drehmitnahme der Innenwelle 60 erfolgt jetzt über direkten Formschluß zwischen Mitnehmern 65' und Innenwelle 60.

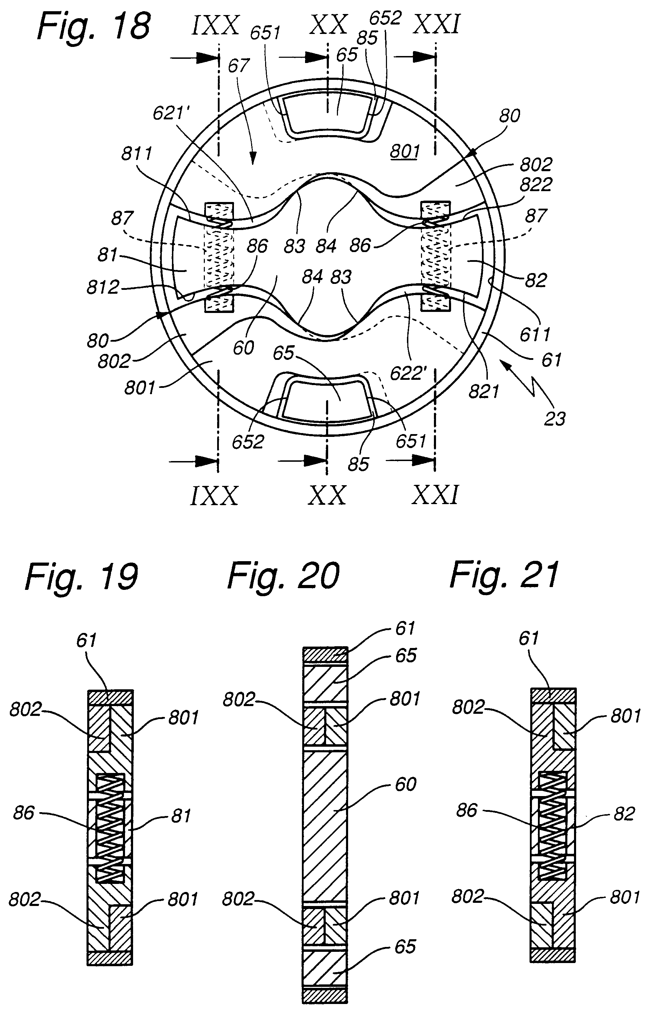

Die beiden in Fig. 18 - 25 dargestellten Getriebe 23 zeichnen sich durch die Anordnung der Klemmkörper 67 in zwei Wirkebenen aus, die in axialer Richtung unmittelbar nebeneinander liegen. Durch diese Anordnung wird bei einer Mindestanzahl von Klemmkörpern eine gleichmäßige, über den Umfang verteilte Anlage der Klemmkörper 67 an der Innenwand 611 des Gehäuse 61 und hohe Klemmwirkung erzielt.

Die wiederum koaxial im Innern des Gehäuses 61 angeordnete, mit einem Verstellorgan drehfest verbundene Innenwelle 60 trägt zwei bis nahe an die Gehäuseinnenwand 611 reichende diametrale Radialarme 81 und 82, die den zwischen Innenwelle 60 und Gehäuseinnenwand 611 eingeschlossenen Ringraum 62' in zwei Ringraumabschnitte 621' und 622' unterteilt. Jeder Ringraumabschnitt 621' bzw. 622' wird außen von der Gehäuseinnenwand 611 und innen von zwei konvex ausgebildeten Klemmabschnitten 83 und 84 auf der Innenwelle 60 als Abstützflächen für die als bogenförmige Klemmsegmente 801,802 ausgebildeten Klemmkörper 67 begrenzt. In jedem Ringraumabschitt 621' bzw. 622' sind zwei der bogenförmigen Klemmsegmente 801 und 802 in Getriebeachsrichtung gesehen unmittelbar nebeneinander angeordnet. Die Klemmsegmente 801,802 erstrecken sich dabei nahezu über den gesamten Ringraumabschnitt 621' bzw. 622' und sind so geformt, daß sie sich einerseits an die Gehäuseinnenwand 611 anlegen und andererseits auf einem zugeordneten Klemmabschnitt 83 bzw. 84 abstützen. Jeweils ein Klemmsegment 801 und ein Klemmsegment 802 bilden ein Klemmsegmentpaar 80.

Wie aus Fig. 18 und den Schnittdarstellungen gemäß Fig. 19 - 21 hervorgeht, sind einerseits die Klemmsegmente 801 und andererseits die Klemmsegmente 802 der beiden Klemmsegmentpaare 80 in jeweils einer Wirkebene angeordnet, wobei sich die beiden Wirkebenen parallel und rechtwinklig zur Getriebeachse erstrecken. Das Klemmsegment 801 eines jeden Klemmsegmentpaars 80 stützt sich dabei an dem Klemmabschnitt 83 und das Klemmsegment 802 eines jeden Klemmsegmentpaars 80 an dem Klemmabschnitt 84 der Innenwelle 60 ab. Die Klemmabschnitte 83 sowie die Klemmabschnitte 84 in den beiden Ringraumabschnitten 621' und 622' sind punktsymmetrisch zueinander ausgebildet, wobei der Symmetriepunkt auf der Getriebeachse liegt. Die Klemmsegmente 801 und 802 der Klemmsegmentpaare 80 sind identisch ausgebildet und weisen etwa mittig eine zur Gehäuseinnenfläche 611 hin offene Radialnut 85 auf. Die beiden Klemmsegmente 801 und 802 eines jeden Klemmsegmentpaars 80 sind um 180° gegeneinander gedreht, aneinandergelegt und zueinander in Umfangsrichtung etwas verschoben, wobei die Radialnuten 85 der beiden Klemmsegmente 801 und 802 im wesentlichen miteinander fluchten. Die beiden Radialnuten 85 eines jeden Klemmsegmentpaars 80 nehmen gemeinsam einen von zwei Mitnehmern 65 auf, die, wie vorstehend beschrieben, fest mit dem Innenteil 27 bzw. 27' der Schrittschaltwerke 25 bzw. 25' in Fig. 2 - 12 verbunden sind. Jeder Mitnehmer 65 weist zwei radiale Mitnahmeschultern 651 und 652 auf, die voneinander abgekehrt sind. Die gegenseitige Verschiebung der Klemmsegmente 801 und 802 eines jeden Klemmsegmentpaars 80 in Umfangsrichtung ist nunmehr so vorgenommen, daß die radiale Mitnahmeschulter 651 zu dem zur Mitnahme zugeordneten Klemmsegment 801 einen kleineren Abstand aufweist als zum anderen Klemmkörper 802. Das gleiche gilt für die radiale Mitnahmeschulter 652, die näher an dem zur Mitnahme zugeordneten Klemmsegment 802 als zum anderen Klemmsegment 801 liegt.

Die Klemmsegmentpaare 80 dienen einerseits zum Verklemmen von Innenwelle 60 und Gehäuse 61 bei einem an der Innenwelle 60 angreifenden Antriebsmoment und andererseits zur Drehung der Innenwelle 60 in inversen Drehrichtungen durch ein auf die Mitnehmer 65 aufgebrachtes Drehmoment. Die Drehmitnahme der Innenwelle 60 erfolgt über die Radialarme 81,82, die nach Lösen der Klemmung der Klemmsegmente 801 und 802 an den Klemmabschnitten 83 und 84 in die eine Drehrichtung von den Klemmsegmenten 801 der Klemmsegmentpaare 80 und in die andere Drehrichtung von den Klemmsegmenten 802 der Klemmsegmentpaare 80 mitgenommen werden, wozu jeder Radialarm zwei Radialschultern 811 und 812 bzw. 821 und 822 aufweist, an die sich die entsprechenden Klemmsegmente 801 und 802 nach Verschieben anlegen. Zwischen den Klemmsegmentpaaren 80 sind zwei als Schraubendruckfedern 86 ausgebildete Federelemente so angeordnet, daß sie die Klemmsegmente 801 bzw. 802 zu der ihnen jeweils zugeordneten Mitnahmeschulter 651 bzw. 652 der Mitnehmer 65 hin verschieben. Die Schraubendruckfedern 86 sind jeweils in einer in den Radialarmen 81 und 82 eingebrachten Querbohrung 87 geführt und stützen sich endseitig jeweils an einem Klemmsegment 801 und einem Klemmsegment 802 der beiden Klemmsegmentpaare 80 ab.

Die Wirkungsweise des beschriebenen Getriebes 23 ist wie folgt:

Bei Drehung der Mitnehmer 65 entgegen Uhrzeigersinn legen sich deren Mitnahmeschultern 651 gegen die Klemmsegmente 801, wodurch diese entgegen Uhrzeigerrichtung verschoben werden und sich von dem Klemmabschnitt 83 lösen. Nunmehr legen sich die Klemmkörper 801 der beiden Klemmkörperpaare 80 gegen die Radialschultern 811 und 821 der Radialarme 81 und 82 und drehen diese. Dadurch wird die Innenwelle 60 verdreht und die Klemmung der Klemmsegmente 802 an den Klemmabschnitten 84 wird aufgehoben. Durch die weitere Drehung der Innenwelle 60 kommen die Radialschultern 812 und 822 der Radialarme 81 und 82 an den Klemmsegmenten 802 der beiden Klemmsegmentpaare 80 zur Anlage und nehmen diese bei weiterer Drehung der Mitnehmer 65 mit. Der Drehbereich der Innenwelle 60 kann beliebig gewählt werden. Fällt das Drehmoment an den Mitnehmern 65 weg, so werden die Klemmsegmente 801 und 802 durch die beiden Schraubendruckfedern 86 wieder an die Klemmabschnitte 83,84 an der Innenwelle 60 angedrückt und arretieren das Getriebe 23.

Bei Drehung der Mitnehmer 65 im Uhrzeigersinn legen sich die Mitnahmeschultern 652 der beiden Mitnehmer 65 an die Klemmsegmente 802 der beiden Kemmsegmentpaare 80 an, wodurch die Klemmköper 802 im Uhrzeigersinn verschoben werden und sich von den Klemmabschnitten 84 lösen. Damit legen sich die Klemmsegmente 802 an die Radialschultern 812 und 822 der beiden Radialarme 81 und 82 an und drehen die Innenwelle 60, wodurch die Klemmabschnitte 83 freigegeben werden. Durch die Drehung der Innenwelle 60 berühren sich die Radialschultern 811 und 821 und die Klemmkörper 801 und letztere werden bei der Drehung der Innenwelle 60 mitgenommen. Nach Wegfall des Drehmoments an den Mitnehmern 65 werden die Klemmsegmente 801 und 802 durch die Schraubendruckfedern 86 wieder in ihren zugeordneten Klemmabschnitten 83 und 84 zwischen Innenwelle 60 und Gehäuse 61 verkeilt.

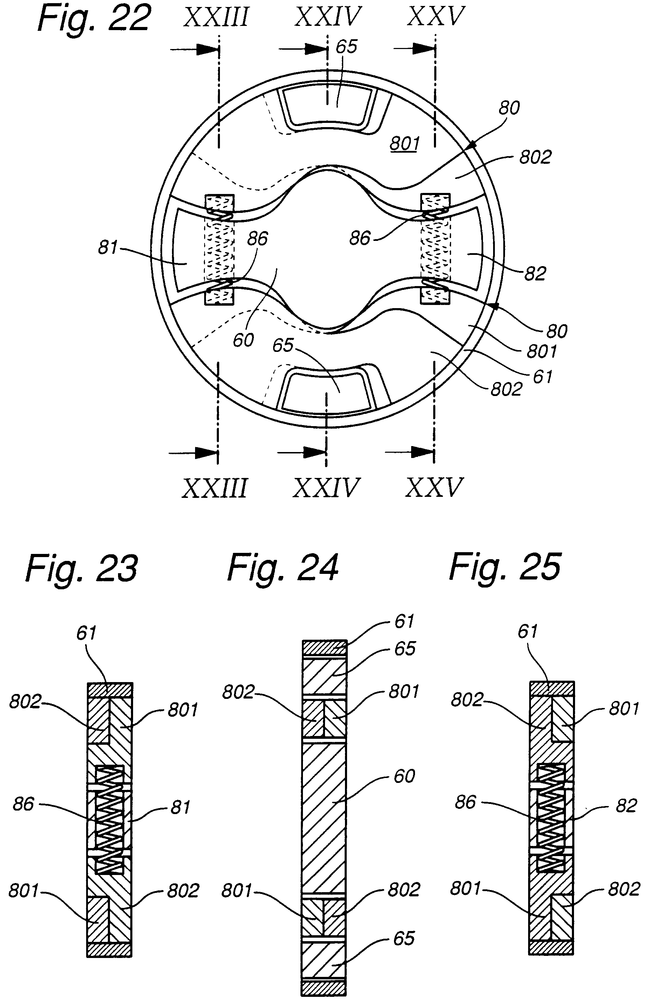

Das in Fig. 22 - 25 dargestellte Getriebe 23 unterscheidet sich von dem zuvor beschriebenen Getriebe 23 nur dadurch, daß die Klemmsegmente 801, die die Drehmitnahme der Innenwelle 60 in die eine Drehrichtung bewirken und die Klemmsegmente 802, die die Drehmitnahme der Innenwelle 60 in die andere Drehrichtung bewirken, nicht mehr in der gleichen Wirkebene liegen, sondern auf beide parallele, rechtwinklig zur Getriebeachse verlaufende Ebenen aufgeteilt sind. Im Beispiel der Fig. 22 - 25 liegt das Klemmsegment 801 des oberen Klemmsegmentpaares 80 in der vorderen Ebene und das untere Klemmsegment 801 in der hinteren Ebene. Das gleiche gilt umgekehrt für die zur Drehmitnahme im Uhrzeigersinn dienenden Klemmsegmente 802 in den beiden Klemmsegmentpaaren 80.

Die Anzahl der an der Innenwelle 60 vorgesehenen Radialarme 81,82 kann größer als zwei gewählt werden, wodurch sich die Zahl der Klemmkörper 801,802 erhöht. Bei beispielsweise drei um jeweils gleiche Umfangswinkel versetzte Radialarme sind drei Klemmsegmentpaare 80 mit insgesamt sechs Klemmkörpern 801 und 802 erforderlich. Die Zahl der Mitnehmer 65 ist ebenfalls auf drei zu erhöhen, pro Klemmsegmentpaar 80 ein Mitnehmer 65. Das Vorsehen von zwei Radialarmen mit vier Klemmkörpern 801,802 und zwei Mitnehmern 65 hat sich jedoch als sinnvoll und kostengünstig erwiesen, um eine ausreichend hohe Klemmwirkung im Getriebe 23 sicherzustellen.

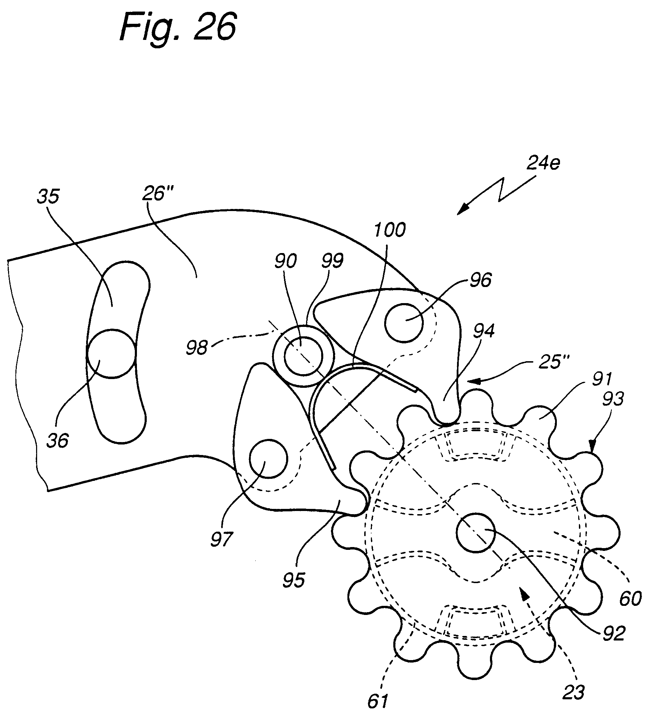

Die in Fig. 18 - 25 dargestellten Getriebe 23 können antriebsseitig anstelle mit den Betätigungseinheiten 24 und 24a bis 24d gemäß Fig. 2 - 12 auch mit einer Betätigungseinheit 24e gemäß Fig. 26 gekoppelt sein, die nach dem Ratschenprinzip arbeitet, allerdings anders als eine einfache Ratsche in beiden Drehrichtungen wirksam ist. Die in Fig. 26 skizzierte Verstellvorrichtung weist neben der Betätigungseinheit 24e ein Getriebe 23 auf, wie es in Fig. 18 - 21 oder in Fig. 22 - 25 dargestellt ist. Bezüglich des Getriebes 23 wird insoweit auf die Beschreibung zu den genannten Fig. verwiesen. Die Betätigungseinheit 24e weist wiederum ein mit dem Antrieb des Getriebes 23 verbundenes Schrittschaltwerk 25'' und einen manuell zu bedienenden Schwenkhebel 26'' zum wiederholten Auslösen des Schrittschaltwerks 25'' auf, der auf einem parallel zur Getriebeachse ausgerichteten Zapfen 90 schwenkbar gelagert ist. Das Schrittschaltwerk 25'' umfaßt ein Schrittrad 91, das drehfest mit dem Antrieb des Getriebes 23 zu dessen Drehmitnahme verbunden ist und hierzu drehbar auf der Getriebewelle 92 sitzt und auf seiner dem Getriebe 63 zugekehrten Seitenfläche die beiden Mitnehmer 65 des Getriebes 63 axial vorspringend trägt. Das Schrittrad 91 ist am Umfang mit einer Außenverzahnung 93 versehen, in die zwei Antriebsklauen 94,95 des Schrittschaltwerks 25'' eingreifen. Die beiden Antriebsklauen 94,95 sind auf dem Schwenkhebel 26'' jeweils in einer Lagerstelle 96,97 schwenkbar gelagert. Die beiden Lagerstellen 96,97 sind dabei symmetrisch zu einer die Schwenkachse (Zapfen 90) des Schwenkhebels 26'' und die Getriebeachse (Getriebewelle (92) schneidenden Geraden 98 im Abstand von dieser auf dem Schwenkhebel 26'' angeordnet. Die beiden identisch ausgebildeten Antriebsklauen 94,95 sind zweiarmige Schwenkhebel, von denen jeweils der eine Hebelarm endseitig in die Außenverzahnung 93 des Schrittrads 91 und der andere Hebelarm unter Federkraft an einem mit der Schwenkachse des Schwenkhebels 26'' koaxialen Anschlag 99 anliegt, der hier als eine auf dem Zapfen 90 aufgesteckte und damit axial vom Schwenkhebel 26'' abstehende Buchse ausgebildet ist. Die Federkraft wird durch ein federndes Element, das Druckkräfte ausübt, z.B. eine Blattfeder 100, realisiert, die zwischen den beiden Antriebsklauen 94,95 angeordnet ist und diese in einer voneinander abspreizenden Richtung beaufschlagt. Der Schwenkhebel 26'' hat wie der Schwenkhebel 26 in Fig. 2 - 4 eine Endlagenfixierung, die den Schwenkhub des Schwenkhebels 26'' in beiden Schwenkrichtungen begrenzt. Diese umfaßt ein zum Zapfen 90 konzentrisches bogenförmiges Langloch 35 im Schwenkhebel 26'' und einen in das Langloch 35 hineinragenden, räumlich feststehend angeordneten Stift 36. Durch Anschlag der abgerundeten Enden des Langlochs 35 an dem Stift 36 wird der maximale Schwenkhub des Schwenkhebels 26' festgelegt. Dieser ist so auf die in die Außenverzahnung 93 des Schrittrads 91 eingreifenden Antriebsklauen 94,95 abgestimmt, daß beim maximalen Hub des Schwenkhebels 26'' in die eine oder andere Schwenkrichtung das Schrittrad 91 durch eine der Antriebsklauen 94 bzw. 95 in der einen oder anderen Drehrichtung jeweils um einen Zahn weitergedreht wird.

Die Wirkungsweise der unter Bezugnahme auf Fig. 26 beschriebenen Verstellvorrichtung ist wie folgt:

Der Schwenkhebel 26'' der Betätigungseinheit 24e wird entsprechend der gewünschten Verstellrichtung, beispielsweise in Fig. 26 im Uhrzeigersinn, um den Zapfen 90 geschwenkt. Die Antriebsklaue 95 stützt sich dadurch auf den von der Buchse auf dem Zapfen 90 gebildeten Anschlag 99 ab und bewegt das Schrittrad 91 um einen Zahn entgegen Uhrzeigersinn weiter bevor der Stift 36 am oberen Ende des Langlochs 35 anschlägt. Die Antriebsklaue 94 dreht dabei aus der Außenverzahnung 93 heraus. Wird der Schwenkhebel 26'' wieder in seine in Fig. 26 gezeigten Ausgangslage zurückgestellt, in welcher sich der Stift 36 in der Mitte des Langlochs 35 befindet, so dreht die Antriebsklaue 94 in die nächste Zahnlücke der Außenverzahnung 93 ein, und die Antriebsklaue 95 gleitet nach Überwindung der Federvorspannung der Blattfeder 100 über den nachfolgenden Zahn in die nachfolgende Zahnlücke. Die Drehlage des Schrittrads 91 bleibt dabei unverändert. Wird der Schwenkhebel 26'' in Fig. 26 entgegen Uhrzeigersinn verschwenkt, so stützt sich die Antriebsklaue 94 am Anschlag 99 ab und dreht das Schrittrad 91 um einen Zahn im Uhrzeigersinn. Wie zu Fig. 18 - 25 beschrieben, wird beim Drehen des Schrittrads 91 über die mit dem Schrittrad 91 drehfest verbundenen Mitnehmer 65 die Innenwelle 60 um den gleichen Drehwinkel wie das Schrittrad 90 verdreht, die wiederum das Verstellorgan um einen gleichen Drehwinkel antreibt.

Die Erfindung ist nicht auf die beschriebenen Ausführungsbeispiele beschränkt. So können mit den beschriebenen Verstellvorrichtungen auch andere Verstellfunktionen als Sitzverstellungen bei Fahrzeugsitzen durchgeführt werden. Mit einem einzigen Schwenkhebel können auch mehr als zwei verschiedene Verstellungen ausgeführt werden, wenn weitere Schrittschaltwerke vorgesehen werden. Durch gleichzeitige Kopplung zweier Schrittschaltwerke mit dem Schwenkhebel können zwei Verstellungen gleichzeitig, aber in gegenseitiger Abhängigkeit vorgenommen werden.

## Patentansprüche

1. Verstellvorrichtung zur Durchführung mindestens einer Verstellfunktion, insbesondere zur Verstellung eines Kraftfahrzeugsitzes, mit mindestens einem Antrieb und Abtrieb aufweisenden Getriebe zur Übertragung einer antriebsseitigen Drehbewegung in eine abtriebsseitige Verstellbewegung, das mit Freilauf und Hemmung derart ausgestattet ist, daß bei Kraftfluß vom Antrieb zum Abtrieb das Getriebe in entgegengesetzten Drehrichtungen frei drehbar ist und bei Umkehrung des Kraftflusses sperrt, und mit einer Betätigungseinheit zur Erzeugung einer Drehbewegung in dem einen oder anderen Drehsinn am Antrieb,
**dadurch gekennzeichnet,**
daß die Betätigungseinheit (24) ein mit dem Antrieb des Getriebes (23) verbundenes, vorzugsweise stufenloses Schrittschaltwerk (25;25'') und einen manuell zu bedienenden Schwenkhebel (26;26'') zum wiederholten Auslösen eines Schaltschritts mit innerhalb eines maximal möglichen Drehwinkels frei wählbarem Drehwinkel des Antriebs aufweist.

2. Vorrichtung nach Anspruch 1,
**dadurch gekennzeichnet,**
daß das Schrittschaltwerk (25) ein mit dem Antrieb des Getriebes (23) zu dessen Drehmitnahme, vorzugsweise unmittelbar drehfest, verbundenes Innenteil (27) mit zylindrischer Außenfläche (271) und ein mit dem Schwenkhebel (26) drehfest koppelbares Außenteil (28) mit zylindrischer, das Innenteil (27) unter Belassung eines Ringraums (29) zu dessen Außenfläche (271) konzentrisch umschließender Innenfläche (281) aufweist, daß in dem Ringraum (29) mindestens zwei räumlich feststehende Anschläge (30) um vorzugsweise gleiche Umfangswinkel zueinander versetzt angeordnet sind und an den beiden Zylinderflächen (271,281) von Innen- und Außenteil (27,28) anliegende Klemmkörper (31) einliegen, die sich unter Federkraft jeweils paarweise an voneinander in Umfangsrichtung abgekehrten Seiten der Anschläge (30) abstützen, und daß an einer der Zylinderflächen (271) von Innen- und Außenteil (27,28) eine der Anzahl der Anschläge (30) entsprechende Zahl von in den Ringraum (29) radial vorspringenden Axialrippen (33) ausgebildet ist, die um Umfangswinkel zueinander versetzt so angeordnet sind, daß sie in der Grundstellung des Schwenkhebels (26) den Anschlägen (30) radial gegenüberstehen.

3. Vorrichtung nach Anspruch 2,
**dadurch gekennzeichnet,**
daß die Axialrippen (33) an der Innenfläche (281) des Außenteils (28) ausgebildet sind.

4. Vorrichtung nach Anspruch 2 oder 3,
**dadurch gekennzeichnet,**
daß zur Erzeugung der Federkraft an den Klemmkörpern (31) jeweils zwischen zwei in Umfangsrichtung aufeinanderfolgenden Klemmkörpern (31), die sich an einander zugekehrten Seiten zweier aufeinanderfolgender Anschläge (30) abstützen, eine Druckfeder (32) angeordnet ist, die an jedem der Klemmkörper (31) mit in Umfangsrichtung gerichteter Druckkraft angreift.

5. Vorrichtung nach einem der Ansprüche 2 - 4,
**dadurch gekennzeichnet,**
daß die Klemmkörper (31) als Kugeln, Walzen oder Rollen, trapezförmige Klemmelemente u.dgl., ausgebildet sind.

6. Vorrichtung nach einem der Ansprüche 2 - 5,
**dadurch gekennzeichnet,**
daß im Außenteil (28) oder im Schwenkhebel (26) ein auf einem zum Innenteil (27) bzw. zur Innenfläche (281) des Außenteils (28) konzentrischen Kreis angeordnetes bogenförmiges Langloch (35) vorgesehen ist und daß ein räumlich feststehender Stift (36) in das Langloch (35) hineinragt und so angeordnet ist, daß er in der Grundstellung des Schwenkhebels (26) im Langloch (35) mittig plaziert ist.

7. Vorrichtung nach einem der Ansprüche 2 - 6,
**dadurch gekennzeichnet,**
daß der Schwenkhebel (26) einstückig mit dem Außenteil (28) des Schrittschaltwerks (25) ausgebildet ist.

8. Vorrichtung nach einem der Ansprüche 1 - 6,
**dadurch gekennzeichnet,**
daß die Betätigungseinheit (24) mindestens ein weiteres Schrittschaltwerk (25') aufweist, das koaxial neben dem ersten Schrittschaltwerk (25) angeordnet und mit dem Antrieb eines weiteren Getriebes (23) verbunden ist, und daß der Schwenkhebel (26') wahlweise mit einem der Schrittschaltwerke (25,25') oder mit beiden Schrittschaltwerken (25,25') gleichzeitig koppelbar ist.

9. Vorrichtung nach Anspruch 8,
**dadurch gekennzeichnet,**
daß der Schwenkhebel (26') koaxial zum Innen- und Außenteil (27,28 bzw. 27',28') der Schrittschaltwerke (25,25') schwenkbar gelagert ist und mindestens eine der Anzahl der Schrittschaltwerke (25,25') entsprechende Zahl von axial abstehenden Mitnehmerstiften (41,42) trägt, die wahlweise in mindestens eine axiale Aufnahme (43,44) in dem Außenteil (28,28') des zugeordneten Schrittschaltwerks (25,25') zu dessen Drehmitnahme formschlüssig einschiebbar sind.

10. Vorrichtung nach Anspruch 9,
**dadurch gekennzeichnet,**
daß die Schrittschaltwerke (25,25') einander unmittelbar benachbart angeordnet sind und der Schwenkhebel (26') neben einem äußeren Schrittschaltwerk (25') angeordnet ist.

11. Vorrichtung nach Anspruch 10,
**dadurch gekennzeichnet,**
daß die Mitnehmerstifte (41,42) im Schwenkhebel (26') axial verschieblich ausgebildet sind, daß an jedem Mitnehmerstift (41,42) ein diesen in Außereingriff mit dem Außenteil (28,28') des zugeordneten Schrittschaltwerks (25,25') haltendes elastisches Rückstellelement (45) angreift und daß ein manuell zu bediendendes Verriegelungsglied (46) wahlweise mit einem der Mitnehmerstifte (41,42) zu dessen Verriegelung in dessen Eingriffstellung in dem Außenteil (28,28') des zugeordneten Schrittschaltwerks (25,25') in Eingriff bringbar ist.

12. Vorrichtung nach Anspruch 11,
**dadurch gekennzeichnet,**
daß die Mitnehmerstifte (41,42) in axialen Führungsbohrungen (39,40) im Schwenkhebel (26') verschiebbar gehalten sind, daß die Führungsbohrungen (39,40) auf einem zur Schwenkhebelachse konzentrischen Bohrungskreis um Umfangswinkel gegeneinander versetzt angeordnet sind und daß das Verriegelungsglied (46) als ein um die Schwenkhebelachse drehbares Federblech (47) ausgebildet ist, das in der Eingriffstellung eines Mitnehmerstiftes (41,42) zu dessen Verriegelung über dessen Stirnseite schwenkbar ist.

13. Vorrichtung nach Anspruch 9,
**dadurch gekennzeichnet,**
daß der Schwenkhebel (26') zwischen zwei Schrittschaltwerken (25,25') axial verschieblich angeordnet ist und auf jeder der voneinander abgekehrten Stirnseiten mindestens einen feststehenden, axial vorspringenden Mitnehmerstift (41',42') trägt und daß die Mitnehmerstifte (41',42') durch axiale Verschiebung des Schwenkhebels (26') in die eine oder andere Richtung in die mindestens eine axiale Aufnahme (43,44) im Außenteil (28,28') des zugeordneten Schrittschaltwerks (25,25') einschiebbar sind.

14. Vorrichtung nach Anspruch 13,
**dadurch gekennzeichnet,**
daß der Schwenkhebel (26') zweiteilig ausgebildet ist und einen zu den Schrittschaltwerken (25,25') koaxialen, die Mitnehmerstifte (41',42') tragenden, axial verschiebbaren Kupplungsring (48) mit zwei am Umfang diametral angeordneten, radial abstehenden Zapfen (50) und einen Gabelhebel (49) aufweist, der mit seinen halbkreisbogenförmigen Gabelschenkeln (491,492) den Kupplungsring (48) umgreift und auf den Zapfen (50) schwenkbar gelagert ist.

15. Vorrichtung nach Anspruch 13,
**dadurch gekennzeichnet,**
daß der axial verschiebliche Schwenkhebel (26') durch Federkraft mit dem Außenteil (28,28') des einen Schrittschaltwerks (25,25') in ständigem Eingriff steht und daß am Schwenkhebel (26'), vorzugsweise aneinander diametralen Stellen, ein Seilzug (53) zu dessen Axialverschiebung gegen die Federkraft angreift.

16. Vorrichtung nach Anspruch 8,
**dadurch gekennzeichnet,**
daß die Außenteile (28,28') zweier unmittelbarer nebeneinander angeordneter Schrittschaltwerke (25,25') in kongruenter Ausrichtung zueinander über einen Zwischenring (55) mit rein zylindrischer innerer Ringfläche (551) miteinander zu einer axial verschieblichen Schaltbuchse (56) verbunden sind, so daß durch axiale Verschiebung der Schaltbuchse (56) in die oder andere Verschieberichtung jeweils der Zwischenring (55) die Klemmkörper (31) in dem einen oder anderen Schrittschaltwerk (25,25') zur Herstellung eines Freilaufs übergreift, und daß der Schwenkhebel (26') drehfest mit der Schaltbuchse (56) verbunden ist.

17. Vorrichtung nach Anspruch 16,
**dadurch gekennzeichnet,**
daß die Schaltbuchse (56) einstückig mit radial vorspringenden Axialrippen 833) ausgebildet ist und daß axial mittig in der Schaltbuchse (56) in einer der Klemmkörper (31) entsprechenden axialen Breite durch Freistich die zylindrische Ringfläche (551) ausgespart ist.

18. Vorrichtung nach Anspruch 1,
**dadurch gekennzeichnet,**
daß das Schrittschaltwerk (25'') ein mit dem Antrieb des Getriebes (23) zu dessen Drehmitnahme drehfest verbundenes, zur Getriebeachse koaxiales Schrittrad (91), das eine Außenverzahnung (93) trägt, und zwei in die Außenverzahnung (93) eingreifende Antriebsklauen 94,95 aufweist, die symmetrisch zu einer die Schwenkachse des Schwenkhebels (26'') und die Getriebeachse schneidenden Geraden (98) im Abstand von dieser schwenkbar auf dem Schwenkhebel (26'') gelagert sind und sich unter Federkraft an einem zur Schwenkachse des Schwenkhebels (26'') koaxialen Anschlag (99) abstützen.

19. Vorrichtung nach Anspruch 18,
**dadurch gekennzeichnet,**
daß der Schwenkhub des Schwenkhebels (26'') in beiden Schwenkrichtungen begrenzt und so auf die Antriebsklauen (94,95) abgestimmt ist, daß beim maximalen Schwenkhub des Schwenkhebels (26'') in die eine oder andere Schwenkrichtung das Schrittrad (91) durch eine der Antriebsklauen (94,95) in der einen oder anderen Drehrichtung um einen Zahn weitergedreht wird.

20. Vorrichtung nach Anspruch 18 oder 19,
**dadurch gekennzeichnet,**
daß der Anschlag (99) als ein von dem Schwenkhebel (26'') axial abstehender Rundkörper ausgebildet ist.

21. Vorrichtung nach einem der Ansprüche 18 - 20,
**dadurch gekennzeichnet,**
daß zur Aufbringung der Federkraft auf die Antriebsklauen (94,95) zwischen den Antriebsklauen (94,95) ein federndes Element, das Druckkräfte ausübt, z.B. eine Blattfeder (100), angeordnet ist, welche die Antriebsklauen (94,95) in einer diese voneinander abspreizenden Richtung beaufschlagt.

22. Vorrichtung nach einem der Ansprüche 1 - 21,
**dadurch gekennzeichnet,**
daß das Getriebe (23) eine abtriebsseitige, mit einem Verstellorgan drehfest verbundene Innenwelle (60) und ein feststehendes Gehäuse (61) aufweist, das mit einer zylindrischen Gehäuseinnenwand (611) die Innenwelle (60) unter Belassung eines Ringspalts (62) zu deren Außenmantel (601) konzentrisch umschließt, daß die Innenwelle (60) um vorzugsweise gleiche Umfangswinkel zueinander versetzt angeordnete, in den Ringspalt (62) radial hineinragende Radialvorsprünge (63) trägt und im Außenmantel (601) eine doppelte Anzahl von Vertiefungen (66) eingebracht sind, die in Umfangsrichtung gesehen auf einer Seite jeweils von einer Radialschulter (631) der Radialvorsprünge (63) begrenzt sind und deren Tiefe zu der von der Radialschulter (631) abgekehrten Seite hin abnimmt, daß in den Vertiefungen (66) jeweils ein Klemmkörper (67) einliegt, der am Boden der Vertiefung (66) und an der Gehäuseinnenwand (611) anliegt und mittels eines federelastischen Elements (Schraubendruckfeder 68) zu der von der Radialschulter (631) abgekehrten Seite der Vertiefung (66) hin verschoben wird, und daß in den Ringspalt (62) eine der Anzahl der Radialvorsprünge (63) entsprechende Zahl von antriebsseitigen Mitnehmern (65) hineinragt, die jeweils zwischen zwei einander zugekehrten Klemmkörpern (67) so plaziert sind, daß sie in Umfangsrichtung einen nur geringen Abstand zu jedem Klemmkörper (67) einhalten.

23. Vorrichtung nach Anspruch 22,
**dadurch gekennzeichnet,**
daß die federelastischen Elemente für jeweils zwei auf in Umfangsrichtung voneinander abgekehrten Seite der Radialvorsprünge (63) liegende Klemmkörper (67) jeweils von einer Schraubendruckfeder (68) gebildet ist, die in einer in Umfangsrichtung sich erstreckenden Durchgangsbohrung (64) in den Radialvorsprüngen (63) einliegt und sich mit ihren Stirnseiten an den beiden Klemmkörpern (67) abstützt.

24. Vorrichtung nach Anspruch 22 oder 23,
**dadurch gekennzeichnet,**
daß die Klemmkörper (67) als Kugeln (69) oder Walzen bzw. Rollen und die Vertiefungen (66) muldenartig mit kreisbogenförmigem Querschnitt ausgebildet sind, deren eine Muldenflanke sich stetig in die Radialschulter (631) des angrenzenden Radialvorsprungs (63) fortsetzt.

25. Vorrichtung nach Anspruch 22 oder 23,
**dadurch gekennzeichnet,**
daß die Klemmkörper (67) als Klemmstücke (70) mit trapezförmigem Querschnitt ausgebildet sind, dessen an der Gehäuseinnenwand (611) und am Außenmantel (601) der Innenwelle (60) anliegenden Querschnittskanten bogenförmig konvex ausgebildet sind, und daß die Vertiefungen (66) asymmetrisch schalenförmig mit unmittelbar an der Radialschulter (631) des angrenzenden Radialvorsprungs (63) liegender größter Tiefe ausgebildet sind.

26. Vorrichtung nach Anspruch 22 oder 23,
**dadurch gekennzeichnet,**
daß die Gehäuseinnenwand (611) mit einer flachen, feinstufigen Innenverzahnung (71) versehen ist, daß die Klemmkörper (67) als Fünfeckprismen (72) und die Vertiefungen (66) als asymmetrische, im Querschnitt etwa sägezahnförmige Längsnuten (63) ausgebildet sind, deren größte Tiefe am Fuße der Radialschultern (631) der Radialvorsprünge (63) liegt, und daß die Innenverzahnung (71) an der Gehäuseinnenwand (611) und die dieser zugekehrte Prismenfläche (721) der auf dem Nutgrund der Längsnuten (73) in Umfangsrichtung verschiebbaren Fünfeckprismen (72) so aufeinander abgestimmt sind, daß die Fünfeckprismen (72) von ihren federelastischen Elementen (Schraubendruckfeder 68) in die Innenverzahnung (71) eingeschoben werden (Fig. 15).

27. Vorrichtung nach einem der Ansprüche 22 - 26,
**dadurch gekennzeichnet,**
daß an der Innenwelle (60) zwei Radialvorsprünge (63) einander diametral gegenüberliegend angeordnet sind, daß in den Ringspalt (62) zwei diametrale, jeweils um 90° gegenüber den Radialvorsprüngen (63) in Umfangsrichtung versetzte Mitnehmer (65) hineingreifen, daß die vier zwischen Mitnehmer (65) und Radialvorsprüngen (63) im Außenmantel (601) der Innenwelle (60) angeordneten Vertiefungen und die vier darin einliegenden Klemmkörper jeweils als eine Mehrzahl von in Umfangsrichtung unmittelbar einanderliegenden Einzelvertiefungen (661-664) bzw. Einzelklemmkörpern (701-704) ausgebildet sind mit der Maßgabe, daß nur die äußerste der Einzelvertiefungen (661) von einer Radialschulter (631) der Radialvorsprünge (63) begrenzt ist und nur der von dem Radialvorsprung (63) abgekehrte äußerste Einzelklemmkörper (704) mit dem Mitnehmer (65) in Kontakt tritt (Fig. 16).

28. Vorrichtung nach dem Oberbegriff des Anspruchs 1, insbesondere nach einem der Ansprüche 1 - 21,
**dadurch gekennzeichnet,**
daß das Getriebe (23) eine abtriebsseitige, mit einem Verstellorgan drehfest verbundene Innenwelle (60) und ein feststehendes Gehäuse (61) aufweist, das mit einer zylindrischen Gehäuseinnenwand (611) die Innenwelle (30) unter Belassung eines Ringspalts (62) zu deren Außenmantel (601) konzentrisch umschließt, daß die Innenwelle (60) um vorzugsweise gleiche Umfangswinkel zueinander versetzt angeordnete Radialnuten (75) trägt und am Außenmantel (601) eine doppelte Anzahl von Erhebungen (76) angeformt sind, deren Höhe jeweils zu einer Nutflanke (751) der Radialnuten (75) hin ansteigt, daß zwischen jeder Erhebung (76) und der Gehäuseinnenwand (611) ein Klemmkörper (67) einliegt, der mittels eines federelastischen Elements (Schraubendruckfeder 68) in Richtung Nutflanken (751) hin verschoben wird, daß in jeder Radialnut (75) ein antriebsseitiger axialer Mitnehmer (65') mit geringem Abstand von den Nutflanken (751) einliegt, der in Radialrichtung über den Nutrand in den Bereich zwischen den Klemmkörpern (67) so hineinragt, daß er bei Verschiebung in Umfangsrichtung zunächst einen Klemmkörper (67) gegen die Kraft des federelastischen Elements (Schraubendruckfeder 68) verschiebt, bevor er an der Nutflanke (751) der Radialnut (75) zur Anlage kommt (Fig. 17).

29. Vorrichtung nach Anspruch 28,
**dadurch gekennzeichnet,**
daß die Klemmkörper (67) in ihrer durch die federelastischen Elemente (Schraubendruckfeder 68) herbeigeführten Klemmlage in Umfangsrichtung über die Nutflanken (751) der Radialnuten (75) vorstehen und daß die axialen Mitnehmer (65') als trapezförmige Stäbe (78) ausgebildet sind, die in Radialrichtung bis etwa zum Nutgrund und zur Gehäuseinnenwand (611) reichen.

30. Vorrichtung nach dem Oberbegriff des Anspruchs 1, insbesondere nach einem der Ansprüche 1 - 21,
**dadurch gekennzeichnet,**
daß das Getriebe (23) eine abtriebsseitige, mit einem Verstellorgan drehfest verbundene Innenwelle (60) und ein Gehäuse (61) aufweist, das mit einer zylindrischen Gehäuseinnenwand (611) die Innenwelle (60) unter Belassung eines Ringraums (62'') koaxial umschließt, daß die Innenwelle (60) um vorzugsweise gleiche Umfangswinkel zueinander versetzt angeordnete, bis nahe der Gehäuseinnenwand (611) reichende Radialarme (81,82) und konvexe Klemmabschnitte (83,84) trägt, von denen jeweils zwei zwischen in Umfangsrichtung aufeinanderfolgenden Radialarmen (81,82) angeordnet sind, daß in jedem von zwei in Umfangsrichtung aufeinanderfolgenden Radialarmen (81,82) begrenzten Ringraumabschnitt (621'',622'') zwei jeweils einem der Radialarme (81,82) zur Drehmitnahme der Innenwelle (60) in inversen Drehrichtungen zugeordnete Klemmsegmente (801,802) einliegen, daß die Klemmsegmente (801,802) in Getriebeachsrichtung nebeneinander angeordnet sind, sich in Umfangsrichtung nahezu über den gesamten Ringraumabschnitt (621'',622'') erstrecken und so geformt sind, daß sie sich einerseits an der Gehäuseinnenwand (611) und andererseits an jeweils einem zugeordneten Klemmabschnitt (83,84) abstützen, daß jedem Klemmsegmentpaar (80) ein antriebsseitiger Mitnehmer (65) zugeordnet ist, der eine radiale Mitnahmerschulter (651) für die einen Klemmsegmente (801) und eine von dieser abgekehrte radiale Mitnahmeschulter (652) für den anderen Klemmsegmente (802) aufweist, und daß zwischen den in Umfangsrichtung aufeinanderfolgenden Klemmksegmentpaaren (80) jeweils ein federelastisches Element (Schraubendruckfeder 86) so angeordnet ist, daß die zwei unterschiedlichen Klemmsegmentpaaren (80) zugehörigen Klemmsegmente (801,802) in Richtung zu der ihnen jeweils zugeordneten Mitnahmeschulter (651,652) des Mitnehmers (65) hin verschoben werden.

31. Vorrichtung nach Anspruch 30,
**dadurch gekennzeichnet,**
daß in jedem Klemmsegment (801,802) eine zur Gehäuseinnenfläche (611) hin offene Radialnut (85) so angeordnet ist, daß die Radialnuten (85) eines Klemmsegmentpaars (80) in Getriebeachsrichtung ungefähr deckungsgleich sind, daß ein Mitnehmer (65) gemeinsam von den beiden Radialnuten (85) eines Klemmsegmentpaars (80) aufgenommen ist und daß die beiden Radialnuten (85) eines Klemmsegmentpaars (80) in Umfangsrichtung geringfügig gegeneinander so verschoben sind, daß die radiale Mitnahmeschultern (651,652) des in den Radialnuten (85) einliegenden Mitnehmers (65) zu dem zur Mitnahme jeweils zugeordneten Klemmsegment (801 bzw. 802) einen kleineren Abstand haben als zum anderen Klemmsegment (802 bzw 801).

32. Vorrichtung nach Anspruch 30 oder 31,
**dadurch gekennzeichnet,**
daß jedes elastische Element von einer Schraubendruckfeder (86) gebildet ist, die in einer Querbohrung (87) im Radialarm (81,82) geführt ist und sich endseitig jeweils an einem zu aufeinanderfolgenden Klemmsegmentpaaren (80) zugehörigen Klemmsegment (801,802) abstützt.

33. Vorrichtung nach einem der Ansprüche 30 - 32,
**dadurch gekennzeichnet,**
daß die Innenwelle (60) zwei diametrale Radialarme (81,82) trägt, daß die Klemmsegmentpaare (80) aus identisch ausgebildeten Klemmsegmenten (801,802) bestehen und daß die auf die Innenwelle (60) in gleicher Drehrichtung wirkenden Klemmsegmente (801 bzw. 802) der beiden Klemmsegmentpaare (80) bezüglich der Getriebeachse jeweils punktsymmetrisch zueinander angeordnet sind.

34. Vorrichtung nach Anspruch 33,
**dadurch gekennzeichnet,**
daß die auf die Innenwelle (60) in gleicher Drehrichtung wirkenden Klemmsegmente (801 bzw. 802) der beiden Klemmsegmentpaare (80) in der gleichen, zur Getriebeachse rechtwinklig ausgerichteten Ebene liegen.

35. Vorrichtung nach Anspruch 33,
**dadurch gekennzeichnet,**
daß die auf die Innenwelle (60) in gleicher Drehrichtung wirkenden Klemmsegmente (801 bzw. 802) der beiden Klemmsegmentpaare (80) in zwei parallelen, rechtwinklig zur Getriebeachse ausgerichteten Ebenen liegen.

## Claims

1. Adjusting device for performing at least one adjusting function, particularly for adjusting a vehicle seat, having at least one gear provided with a drive side and a driven side for transferring a drive-side rotary movement into a driven-side adjusting movement, which is equipped with freewheeling and brake action in such a way that in the case of a force flow from the drive side to the driven side the gear is freely rotatable in opposite rotation directions and is locked on reversing the force flow, and having an actuator for producing a rotary movement in one or other rotation direction on the drive, characterized in that the actuator (24) has a preferably continuous stepping mechanism (25, 25'') connected with the drive of the gear (23) and a manually operable pivoted lever (26, 26'') for the repeated initiation of a step with a freely selectable drive rotation angle within a maximum possible rotation angle.

2. Device according to claim 1, characterized in that the stepping mechanism (25) has an inner part (27) connected with the drive of the gear (23) for its rotary driving and preferably directly non-rotary and having a cylindrical outer face and an outer part (28) couplable in non-rotary manner to the pivoted lever (26) and having a cylindrical inner face (251) concentrically surrounding the inner part (27) whilst leaving an annular space (29) with respect to its outer face (271), that in the annular space (29) are arranged at least two spatially fixed stops (30) about preferably mutually offset, identical circumferential angles and clamping bodies (31) are provided engaging on the two cylinder faces (271, 281) of the inner and outer parts (27, 28), which are supported under spring tension in each case in pairwise manner on circumferentially remote sides of the stops (30), and that on one of the cylinder faces (271) of the inner and outer parts (27, 28) is constructed a number of axial ribs (33) projecting radially into the annular space (29) corresponding to the number of stops (30) and which are so arranged in offset manner about the circumferential angle that they radially face the stops (30) in the normal position of the pivoted lever (26).

3. Device according to claim 2, characterized in that the axial ribs (33) are constructed on the inner face (281) of the outer part (28).

4. Device according to claim 2 or 3, characterized in that for producing the spring tension on the clamping bodies (31), in each case between two circumferentially succeeding clamping bodies (31), which are supported on facing sides of two successive stops (30) is located a compression spring (32), which acts on each of the clamping bodies (31) with a circumferentially directed compressive force.

5. Device according to one of the claims 2 to 4, characterized in that the clamping bodies (31) are constructed as balls, rollers or rolls, trapezoidal clamping elements, etc.

6. Device according to one of the claims 2 to 5, characterized in that in the outer part (28) or in the pivoted lever (26) is provided an arcuate elongated hole (35) arranged on a circle concentric to the inner part (27) or to the inner face (281) of the outer part (28) and that a spatially fixed pin (36) projects into the elongated hole (35) and is so positioned that it is centrally located in said elongated hole (35) when the pivoted lever (26) is in the normal position.

7. Device according to one of the claims 2 to 6, characterized in that the pivoted lever (26) is constructed in one piece with the outer part (28) of the stepping mechanism (25).

8. Device according to one of the claims 1 to 6, characterized in that the actuator (24) has at least one further stepping mechanism (25'), which is positioned coaxially alongside the first stepping mechanism (25) and is connected to the drive of a further gear (23), and that the pivoted lever (26') can, as desired, be coupled to one of the stepping mechanisms (25, 25') or simultaneously to both stepping mechanisms (25, 25').

9. Device according to claim 8, characterized in that the pivoted lever (26') is pivotably mounted coaxially to the inner and outer parts (27, 28 or 27', 28') of the stepping mechanism (25, 25') and carries at least a number of axially projecting driving pins (41, 42) corresponding to the number of stepping mechanism (25, 25') and which can be, as desired, positively slid into at least one axial receptacle (43, 44) in the outer part (28, 28') of the associated stepping mechanism (25, 25') for the rotary driving thereof.

10. Device according to claim 9, characterized in that the stepping mechanisms (25, 25') are positioned directly adjacent to one another and the pivoted lever (26') is located alongside an outer stepping mechanism (25').

11. Device according to claim 10, characterized in that the driving pins (41, 42) are axially displaceably constructed in the pivoted lever (26'), that on each driving pin (41, 42) engages an elastic restoring element (45) maintaining it in disengagement with the outer part (28, 28') of the associated stepping mechanism (25, 25') and that a manually operable locking member (46) can be engaged, as desired, with one of the driving pins (41, 42) for the locking thereof in its engagement position in the outer part (28, 28') of the associated stepping mechanism (25, 25').

12. Device according to claim 11, characterized in that the driving pins (41, 42) are displaceably held in axial guide holes (39, 40) in the pivoted lever (26'), that the guide holes (39, 40) are mutually displaced about circumferential angles on a hole circle concentric to the pivoted lever axis and that the locking member (46) is constructed as a spring plate (47) rotatable about the pivoted lever axis and which in the engagement position of a driving pin (41, 42) is pivotable over its front face for the locking thereof.

13. Device according to claim 9, characterized in that the pivoted lever (26') is axially displaceably positioned between two stepping mechanisms (25, 25') and carries on each of the remote front faces at least one fixed, axially projecting drive pin (41', 42') and that the driving pins (41', 42') by axial displacement of the pivoted lever (26') in one or other direction can be slid into at least one axial receptacle (43, 44) in the outer part (28, 28') of the associated stepping mechanism (25, 25').

14. Device according to claim 13, characterized in that the pivoted lever (26') is constructed in two parts and has an axially displaceable coupling ring (48), carrying the driving pins (41, 42'), coaxial to the stepping mechanisms (25, 25') and having two circumferentially diametrically arranged, radially projecting lugs (50) and a forked lever (49), which with its semi-arcuate fork legs (491, 492) engages round the coupling ring (48) and is pivotably mounted on the lugs (50).

15. Device according to claim 13, characterized in that the axially displaceable pivoted lever (26') is in constant engagement by spring tension with the outer part (28, 28') of one stepping mechanism (25, 25') and that on the pivoted lever (26') at preferably diametrical points engages a cable line (53) for its axial displacement against the spring tension.

16. Device according to claim 8, characterized in that the outer parts (28, 28') of two directly juxtaposed stepping mechanism (25, 25') are connected in congruent orientation to one another by means of an intermediate ring (55) with a purely cylindrical, inner ring face (551) to an axially displaceable connecting bush (56), so that by the axial displacement of the switching bush (56) in or other displacement direction in each case of the intermediate ring (55) the clamping bodies (31) engages over in one or other stepping mechanism (25, 25') for producing freewheeling and that the pivoted lever (26') is connected in non-rotary manner to the connecting bush (56).

17. Device according to claim 16, characterized in that the connecting bush (56) is constructed in one piece with radially projecting axial ribs (833) and that the cylindrical ring face (551) is axially and centrally recessed in the connecting bush (56) by undercutting in an axial width corresponding to the clamping bodies (31).

18. Device according to claim 1, characterized in that the stepping mechanism (25'') has a step wheel (91) coaxial to the gear axis and connected in non-rotary manner to the drive of the gear (23) for the rotary driving thereof and which carries an outer tooth system (93) and has two claw couplings (94, 95) engaging in the outer tooth system (93) and which are mounted symmetrically to lines (98) intersecting the gear axis and the pivot axis of the pivoted lever (26'') in spaced manner therefrom and in pivotable manner on the pivoted lever (26'') and supported under spring tension on a stop (99) coaxial to the pivot axis of the pivoted lever (26'').

19. Device according to claim 18, characterized in that the pivot stroke of the pivoted lever (26'') is limited in both pivoting directions and is in this way matched to the claw couplings (94, 95), so that during the maximum pivot stroke of the pivoted lever (26'') in one or other pivoting direction the step wheel (91) is further rotated by one tooth in or other rotation direction by one of the claw couplings (94, 95).

20. Device according to claim 18 or 19, characterized in that the stop (99) is constructed as a round component projecting axially from the pivoted lever (26'').

21. Device according to one of the claims 18 to 20, characterized in that for applying spring tension to the claw couplings (94, 95) between the latter is positioned a resilient element, which exerts compressive forces, e.g. a leaf spring (100), which urges the claw couplings (94, 95) in a direction spreading them apart.

22. Device according to one of the claims 1 to 21, characterized in that the gear (23) has a driven-side inner shaft (60) connected in non-rotary manner to an adjusting member and a fixed housing (61), which with a cylindrical housing inner wall (611) concentrically surrounds the outer shaft (60), whilst leaving an annular clearance (62) with respect to its outer casing (601), that the inner shaft (60) carries radial projections (63) projecting radially into the annular clearance (62) and mutually displaced by preferably identical circumferential angles and in the outer casing (61) is introduced twice the number of depressions (66), which circumferentially considered are bounded on one side by in each case a radial shoulder (631) of the radial projection (63) and whose depth decreases towards the side remote from the radial shoulder (631), that in the depressions (66) is in each case inserted a clamping body (67), which engages on the bottom of the depression (66) and on the housing inner wall (611) and by means of a spring elastic element (helical compression spring 68) is moved towards the side of the depression (66) remote from the radial shoulder (631) and that into the annular clearance (62) projects a number of drive-side drivers (65) corresponding to the number of radial projections (65) and which in each case are so positioned between two facing clamping bodies (67) that in the circumferential direction they maintain only a small spacing with respect to each clamping body (67).

23. Device according to claim 22, characterized in that the spring elastic elements for in each case two clamping bodies (67) located on circumferentially remote side of the radial projection (63) are in each case formed by a helical compression spring (68), which is inserted in a circumferentially extending through hole (64) in the radial projection (63) and are supported with their front faces on the two clamping bodies (67).

24. Device according to claim 22 or 23, characterized in that the clamping bodies (67) are constructed as balls (69), rollers or rolls and the depressions (66) are constructed in trough-like manner with arcuate cross-section and whose one trough side continuously extends into the radial shoulder (631) of the adjacent radial projection (63).

25. Device according to claim 22 or 23, characterized in that the clamping bodies (67) are constructed as clamping pieces (70) with trapezoidal cross-section, whose cross-sectional edges engaging on the housing inner wall (611) and the outer casing (601) of the inner shaft (60) have an arcuate, convex construction and that the depressions (66) are constructed asymmetrically in shell-like manner with the maximum depth located directly on the radial shoulder (631) of the adjacent radial projections (63).

26. Device according to claim 22 or 23, characterized in that the housing inner wall (611) is provided with a flat, delicately stepped inner tooth system (71), that the clamping bodies (67) are constructed as pentagonal prisms (72) and the depressions (66) as asymmetrical, cross-sectionally approximately sawtooth-shaped longitudinal grooves (63), whose maximum depth is at the foot of the radial shoulders (631) of the radial projections (63) and that the inner tooth system (71) on the housing inner wall (611) and the prism face (721) facing the same of the pentagonal prisms (72) circumferentially displaceable on the groove bottom of the longitudinal grooves (73) are so matched to one another that the pentagonal prisms (72) are introduced by their spring elastic elements (helical compression springs 68) into the inner tooth system (71) (fig. 15).

27. Device according to one of the claims 22 to 26, characterized in that on the inner shaft (60) are provided in diametrically facing manner two radial projections (63), that in the annular clearance (62) engage two diametrical drivers (65) circumferentially displaced by 90° with respect to the radial projection (63), that the four depressions located between the drivers (65) and radial projections (63) in the outer casing (601) of the inner shaft (60) and the four clamping bodies inserted therein are in each case constructed as a plurality of circumferentially directly facing individual depressions (661-664) or individual clamping bodies (701-704) with the proviso that only the outermost of the individual depressions (661) is bounded by a radial shoulder (631) of the radial projection (63) and only the outermost individual clamping bodies (704) remote from the radial projection (63) comes into contact with the driver (65) (fig. 16).

28. Device according to the preamble of claim 1, particularly according to claims 1 to 21, characterized in that the gear (23) has a driven-side inner shaft (60) connected in non-rotary manner to an adjusting member and a fixed housing (61), which with a cylindrical housing inner wall (611) concentrically surrounds the inner shaft (30), whilst leaving an annular clearance (62) with respect to its outer casing (601), that the inner shaft (60) carries radial grooves (75) displaced with respect to one another by preferably identical circumferential angles and on the outer casing (601) are formed a double number of protuberances (76), whose height in each case rises to a groove side (751) of the radial grooves (75), that between each protuberance (76) and the housing inner wall (611) is inserted a clamping body (67), which by means of a spring elastic element (helical compression spring 68) is moved in the direction of the groove sides (751), that in each radial groove (75) is inserted a drive-side, axial driver (65') with limited spacing from the groove sides (751), which in the radial direction projects over the groove edge in the area between the clamping bodies (67) in such a way that during circumferential displacement it initially moves a clamping body (67) against the tension of the spring elastic element (helical compression spring 68) before it engages on the groove side (751) of the radial groove (75) (fig. 17).

29. Device according to claim 28, characterized in that the clamping bodies (67) in their clamping position brought about by the spring elastic elements (helical compression springs 68) project circumferentially over the groove sides (751) of the radial grooves (75) and that the axial drivers (65') are constructed as trapezoidal rods (78), which extend radially roughly to the bottom of the groove and to the housing inner wall (611).

30. Device according to the preamble of claim 1, particularly according to one of the claims 1 to 21, characterized in that the gear (23) has a driven-side inner shaft (60) connected in non-rotary manner to an adjusting member and a housing (61), which with a cylindrical housing inner wall (611) coaxially surrounds the inner shaft (60) whilst leaving an annular space (62''), that the inner shaft (60) carries radial arms (81, 82) extending close to the housing inner wall (611) and mutually displaced by preferably identical circumferential angles, as well as convex clamping portions (83, 84), whereof in each case two are located between circumferentially succeeding radial arms (81, 82), that in each annular space portion (621'', 622'') bounded by circumferentially succeeding radial arms (81, 82) are inserted two clamping segments (801, 802) associated in each case with one of the radial arms (81, 82) for the rotary driving of the inner shaft (60) in inverse rotation directions, that the clamping segments (801, 802) are juxtaposed in the gear axial direction, extend circumferentially over virtually the entire annular space portion (621'' 622'') and are so shaped that they are supported on the one hand on the housing inner wall (611) and on the other on in each case an associated clamping portion (83, 84), that with each clamping segment pair (80) is associated a drive-side driver (65), which has a radial driving shoulder (651) for one clamping segment (801) and a radial driving shoulder (652) remote therefrom for the other clamping segment (802) and that between the circumferentially succeeding clamping segment pairs (80) is in each case so positioned a spring elastic element (helical compression spring 86) that the clamping segments (801, 802) belonging to two different clamping segment pairs (80) are displaced in the direction of their in each case associated driving shoulder (651, 652) of the driver (65).

31. Device according to claim 30, characterized in that in each clamping segment (801, 802) is so positioned a radial groove (85) open to the housing inner face (611) that the radial grooves (85) of a clamping segment pair (80) are arranged approximately congruently in the gear axial direction, that a driver (65) is jointly received by the two radial grooves (85) of a clamping segment pair (80) and that the two radial grooves (85) of a clamping segment pair (80) are so slightly circumferentially displaced against one another that the radial driving shoulders (651, 652) of the driver (65) inserted in the radial grooves (85) has a smaller spacing from the drive-associated clamping (801 or 802) than with respect to the other clamping segment (802 or 801).

32. Device according to claim 30 or 31, characterized in that each elastic element is formed by a helical compression spring (86), which is guided in a cross-hole (87) in the radial arm (81, 82) and is terminally supported on a clamping segment (801, 802) belonging to successive clamping segment pairs (80).

33. Device according to one of the claims 30 to 32, characterized in that the inner shaft (60) carries two diametrical radial arms (81, 82), that the clamping segment pairs (80) comprise identically constructed clamping segments (801, 802) and that the clamping segments (801 or 802) of the two clamping segment pairs (80) acting in the inner shaft (60) in the same rotation direction are in each case mutually arranged in centrosymmetrical manner with respect to the gear axis.

34. Device according to claim 33, characterized in that the clamping segments (801 or 802) of the two clamping segment pairs (80) acting on the inner shaft (60) in the same rotation direction are located in the same plane oriented at right angles to the gear axis.

35. Device according to claim 33, characterized in that the clamping segments (801 or 802) of the two clamping segment pairs (80) acting on the inner shaft (60) in the same rotation direction are located in two parallel planes oriented at right angles to the gear axis.

## Revendications

1. Dispositif de réglage pour réaliser au moins une fonction de réglage, notamment pour le réglage d'un siège de véhicule, comportant au moins une transmission mécanique présentant une entrée et une sortie pour transformer un mouvement de rotation du côté de l'entrée en un mouvement de réglage du côté de la sortie, cette transmission mécanique étant munie d'une roue libre et d'un échappement de telle sorte que la transmission est susceptible de tourner librement dans les deux sens de rotation lorsque l'effort s'exerce de l'entrée vers la sortie, mais se bloque lorsque l'effort s'inverse, dispositif comprenant également une unité d'actionnement pour provoquer un mouvement de rotation dans l'un ou l'autre sens au niveau de l'entrée,
caractérisé en ce que l'unité d'actionnement (24) comporte un mécanisme d'avancement graduel (25, 25''), de préférence à réglage continu, relié à l'entrée de la transmission (23), et un levier de basculement (26, 26'') à actionnement manuel pour déclencher de manière répétée un pas de commutation selon un angle de rotation de l'entrée pouvant être librement choisi à l'intérieur d'un angle de rotation maximal possible.

2. Dispositif selon la revendication 1, caractérisé en ce que le mécanisme d'avancement graduel (25) comporte
une pièce intérieure (27) reliée, de préférence par une liaison directe fixe en rotation, à l'entrée de la transmission (23) pour entraîner cette dernière conjointement en rotation, cette pièce intérieure (27) comportant une surface extérieure (271) cylindrique,
et une pièce extérieure (28) susceptible d'être accouplée de manière fixe en rotation au levier de basculement (26), cette partie extérieure (28) comportant une surface intérieure (281) cylindrique entourant de manière concentrique la pièce intérieure (27) en conservant un espace annulaire par rapport à la surface extérieure (271) de cette dernière,
en ce que dans l'espace annulaire (29) sont disposées au moins deux butées (30) fixes et décalées les unes par rapport aux autres, de préférence selon le même écart angulaire, ainsi que des corps de serrage (31) appliqués contre les deux surfaces cylindriques (271, 281) des pièces intérieure et extérieure (27, 28), qui s'appliquent par paire, chacun sous l'effet d'une force élastique, contre les flancs des butées (30) opposés l'un par rapport à l'autre dans la direction périphérique,
et en ce que sur l'une des surfaces cylindrique (271) des pièces intérieure et extérieure (27, 28) sont conformées, en nombre correspondant au nombre des butées (30), des nervures axiales (33) pénétrant radialement dans l'espace annulaire (29), ces nervures (33) étant décalées les unes par rapport aux autres selon des secteurs angulaires tels qu'elles sont placées radialement en regard des butées (30) dans la position de base du levier de basculement (26).

3. Dispositif selon la revendication 2, caractérisé en ce que les nervures axiales (33) sont conformées sur la surface intérieure (281) de la pièce extérieure (28).

4. Dispositif selon l'une des revendications 2 ou 3, caractérisé en ce que pour produire la force élastique sur les corps de serrage (31), un ressort de compression (32) est disposé à chaque fois entre deux corps de serrage (31) successifs dans la direction périphérique qui s'appuient contre les flancs en regard l'un de l'autre de deux butées (30) successives, ce ressort de compression (32) venant en prise sur chacun des corps de serrage (31) en exerçant une force de compression dirigée dans la direction périphérique.

5. Dispositif selon l'une des revendications 2 à 4, caractérisé en ce que les corps de serrage (31) sont conformés en billes, en tambours ou rouleaux, en éléments de serrage trapézoïdaux ou analogues.

6. Dispositif selon l'une des revendications 2 à 5, caractérisé en ce que dans la pièce extérieure (28) ou dans le levier de basculement (26) est ménagée une ouverture oblongue (35) incurvée disposée selon un cercle concentrique à la pièce intérieure (27) et à la surface intérieure (281) de la pièce extérieure (28), et en ce qu'un doigt (36) fixe en position pénètre dans l'ouverture oblongue (35) et est disposé de façon à être situé au milieu de l'ouverture oblongue (35) dans la position de base du levier de basculement (26).

7. Dispositif selon l'une des revendications 2 à 6, caractérisé en ce que le levier de basculement (26) est conformé d'une seule pièce avec la pièce extérieure (28) du mécanisme d'avancement graduel (25).

8. Dispositif selon l'une des revendications 1 à 6, caractérisé en ce que l'unité d'actionnement (24) présente au moins un autre mécanisme d'avancement graduel (25'), qui est disposé coaxial et adjacent au premier mécanisme d'avancement graduel (25) et est relié à l'entrée d'une autre transmission (23), et en ce que le levier de basculement (26') est susceptible d'être accouplé au choix avec l'un des mécanismes d'avancement graduel (25, 25') ou simultanément avec les deux mécanismes d'avancement graduel (25, 25').

9. Dispositif selon la revendication 8, caractérisé en ce que le levier de basculement (26') est monté à rotation de manière coaxiale aux pièces intérieure et extérieure (respectivement 27, 28, et 27', 28') des mécanismes d'avancement graduel (25, 25') et en ce qu'au moins l'un des mécanismes d'avancement graduel (25, 25') porte un nombre correspondant de tiges d'entraînement (41, 42) éloignées de l'axe, qui sont susceptibles de coulisser en prise d'encastrement dans au moins un évidement axial (43, 44) de la pièce extérieure (28, 28') du mécanisme d'avancement graduel (25, 25') associé pour l'entraîner en rotation.

10. Dispositif selon la revendication 9, caractérisé en ce que les mécanismes d'avancement graduel (25, 25') sont disposés à proximité immédiate l'un de l'autre et le levier de basculement (26') est disposé à proximité d'un mécanisme d'avancement graduel extérieur (25').

11. Dispositif selon la revendication 10, caractérisé en ce que les tiges d'entraînement (41, 42) sont montées à coulissement axial dans le levier de basculement (26'),
en ce que sur chaque tige d'entraînement (41, 42) vient en prise un élément de rappel (45) élastique maintenant cette tige d'entraînement (41, 42) dégagée de la pièce extérieure (28, 28') du mécanisme d'avancement graduel associé (25, 25'),
et en ce qu'un organe de verrouillage (46) à actionnement manuel est susceptible d'être amené en prise avec l'une des tiges d'entraînement (41, 42) au choix pour la verrouiller dans sa position de prise avec la pièce extérieure (28, 28') du mécanisme d'avancement graduel (25, 25') associé.

12. Dispositif selon la revendication 11, caractérisé en ce que les tiges d'entraînement (41, 42) sont maintenues à coulissement dans des perçages de guidage (39, 40) axiaux du levier de basculement (26'),
en ce que les perçages de guidage (39, 40) sont disposés sur un cercle concentrique à l'axe du levier de basculement en étant décalés l'un par rapport à l'autre selon des secteurs angulaires,
et en ce que l'organe de verrouillage (46) est conformé en une lame élastique à ressort (47) montée à rotation sur l'axe du levier de basculement, qui est susceptible de basculer au dessus de la face frontale d'une tige d'entraînement (41, 42) dans la position en prise de cette dernière afin de la verrouiller.

13. Dispositif selon la revendication 9, caractérisé en ce que le levier de basculement (26') est monté à coulissement axial entre deux mécanismes d'avancement graduel (25, 25') et porte sur chacune de ses faces frontales opposées l'une de l'autre au moins une tige d'entraînement (41', 42') en saillie axiale,
et en ce que les tiges d'entraînement (41', 42') sont insérables par coulissement du levier de basculement (26') dans l'un ou l'autre sens dans au moins un évidement axial (43, 44) de la pièce extérieure (25, 25') du mécanisme d'avancement graduel (25, 25') associé.

14. Dispositif selon la revendication 13, caractérisé en ce que le levier de basculement (26') est conformé en deux éléments et comporte une couronne d'accouplement (48) coaxiale au mécanisme d'avancement graduel (25, 25'), portant les tiges d'entraînement (41', 42') et susceptible de coulisser axialement, qui est munie de deux tourillons (50) disposés diamétralement sur la circonférence et en saillie radiale, ainsi qu'un levier en fourche (49), qui entoure par sa partie fourchue (491, 492) en forme de demi-cercle la couronne d'accouplement (48) et est monté à pivotement sur les tourillons (50).

15. Dispositif selon la revendication 13, caractérisé en ce que le levier de basculement (26') susceptible de coulisser axialement est en prise permanente sous l'effet d'une force élastique avec la pièce extérieure (28, 28') de l'un des mécanismes d'avancement graduel (25, 25')
et en ce qu'une commande par câble (53) vient en prise sur le levier de basculement (26'), de préférence en des points diamétralement opposés, pour le faire coulisser axialement à l'encontre de la force élastique.

16. Dispositif selon la revendication 8, caractérisé en ce que les pièces extérieures (28, 28') de deux mécanismes d'avancement graduel (25, 25') disposés immédiatement l'un à côté de l'autre sont reliées, selon des orientations congruentes l'une de l'autre, par l'intermédiaire d'une couronne intermédiaire (55) comportant une surface annulaire intérieure (551) purement cylindrique, pour former un boîtier de commutation (56) susceptible de coulisser axialement, de telle sorte que par coulissement du boîtier de commutation (56) dans l'un ou l'autre sens de coulissement, la couronne intermédiaire (55) correspondante vient à chaque fois en position au dessus des corps de remplissage (31) dans l'un ou l'autre des mécanismes d'avancement graduels (25, 25') pour créer une position de roue libre,
et en ce que le levier de basculement (26') est relié au boîtier de commutation (56) par une liaison fixe en rotation.

17. Dispositif selon la revendication 16, caractérisé en ce que le boîtier de commutation (56) est conformé d'une seule pièce avec des nervures axiales (33) en saillie radiale,
et en ce qu'au milieu du boîtier de commutation (56) dans la direction axiale, la surface annulaire (551) cylindrique est évidée en une gorge de déplacement selon une largeur axiale correspondant aux corps de serrage (31).

18. Dispositif selon la revendication 1, caractérisé en ce que le mécanisme d'avancement graduel (25'') comporte une roue d'avancement graduel (91) reliée fixement en rotation à l'entrée de la transmission (23) pour entraîner cette dernière et coaxiale à l'axe de la transmission, cette roue d'avancement graduel (91) portant une denture extérieure (93), ainsi que deux crabots d'entraînement (94, 95), venant en prise avec la denture extérieure (93), qui sont montés à rotation sur le levier de basculement (26'') symétriquement par rapport à une droite (98) coupant l'axe de basculement du levier de basculement (26'') et l'axe de la transmission et à distance de cette droite, et qui viennent s'appliquer sous l'effet d'une force élastique sur une butée (99) coaxiale à l'axe de basculement du levier de basculement (26'').

19. Dispositif selon la revendication 1, caractérisé en ce que l'amplitude de basculement du levier de basculement (26'') est limité dans les deux sens de basculement et est déterminé au niveau des crabots d'entraînement (94, 95) de telle façon que pour une amplitude de basculement maximale du levier de basculement (91) dans l'un ou l'autre sens de basculement, la roue d'avancement (91) est entraînée en rotation d'une dent dans un sens ou dans l'autre par l'un des crabots d'entraînement (94, 95).

20. Dispositif selon l'une des revendications 18 ou 19, caractérisé en ce que la butée (99) est conformée en un corps rond en saillie axiale du levier de basculement (26'').

21. Dispositif selon l'une des revendications 18 à 20, caractérisé en ce que pour exercer la force élastique sur les crabots d'entraînement (94, 95), un élément faisant fonction de ressort et exerçant des efforts de compression, par exemple un ressort à lame (100), est disposé entre les crabots d'entraînement (94, 95), cet élément agissant sur les crabots d'entraînement (94, 95) selon une orientation les écartant l'un de l'autre.

22. Dispositif selon l'une des revendications 1 à 20, caractérisé en ce que la transmission (23) comporte un arbre intérieur (60), disposé du côté de la sortie et relié par une liaison fixe en rotation à un organe de réglage, ainsi qu'un boîtier (61) fixe, qui entoure de manière concentrique par une paroi intérieure (611) cylindrique l'arbre intérieur (60) en conservant une fente annulaire (62) par rapport à la surface extérieure (601) de ce dernier,
en ce que l'arbre intérieur (60) porte des saillies radiales (63), disposées de préférence décalées les unes par rapport aux autres selon le même écart angulaire et dépassant radialement dans la fente annulaire (62), et des évidements (66) sont conformés dans la surface extérieure (601) en nombre deux fois plus grand, ces évidements (66), vus dans la direction périphérique, étant limités chacun par un épaulement radial (631) des saillies radiales (63) et leur profondeur diminuant vers le côté opposé à l'épaulement radial (631),
en ce que dans chacun des évidements (66) est disposé un corps de serrage (67), qui est situé contre le fond de l'évidement (66) et contre la paroi intérieure (611) du boîtier et est coulissé au moyen d'un élément faisant fonction de ressort élastique (ressort de compression à boudin 68) vers le côté de l'évidement (66) opposé à l'épaulement radial (631),
et en ce que des entraîneurs (65) d'entrée, en nombre correspondant au nombre de saillies radiales (63), pénètrent dans la fente annulaire (62), ces entraîneurs (65) étant placés chacun entre deux corps de serrage (67) en regard l'un de l'autre de façon à ne conserver qu'un écartement réduit par rapport à chaque corps de serrage (67) dans la direction périphérique.

23. Dispositif selon la revendication 22, caractérisé en ce que les éléments faisant fonction de ressort élastique chacun pour deux corps de remplissage (67) appliqués contre des côtés des saillies radiales (63) opposés l'un par rapport à l'autre dans la direction périphérique sont formés chacun par un ressort de compression à boudin (68), disposé dans un perçage traversant (64) des saillies radiales (63) s'étendant dans la direction périphérique et vient s'appliquer par ses faces frontales sur les deux corps de serrage (67).

24. Dispositif selon l'une des revendications 22 ou 23, caractérisé en ce que les corps de serrage (67) sont conformés en billes (69) ou en tambours ou rouleaux, et les évidements (66) sont conformés en cuvette de section transversale en arc de cercle, un flanc de la cuvette se prolongeant de manière continue par l'épaulement radial (631) de la saillie radiale (63) voisine.

25. Dispositif selon l'une des revendications 22 ou 23, caractérisé en ce que les corps de serrage (67) sont conformés en pièces de serrage (70) de section transversale trapézoïdale, les arêtes de la section transversale situées contre la paroi intérieure (611) du boîtier et la surface extérieure (601) de l'arbre intérieur (60) étant de forme convexe en arc,
et en ce que les évidements (66) sont conformés en coque asymétrique dont la plus grande profondeur est située immédiatement contre l'épaulement radial (631) de la saillie radiale (63) adjacente.

26. Dispositif selon l'une des revendications 22 ou 23, caractérisé en ce que la paroi intérieure (611) de boîtier est munie d'une denture intérieure (71) aplatie et de pas réduit,
en ce que les corps de serrage (67) sont conformés en prismes pentagonaux (72) et les évidements (66) en rainures allongées (63) asymétriques, de section transversale approximativement en forme de dent de scie, dont la plus grande profondeur est située au pied des épaulements radiaux (631) des saillies radiales (63),
et en ce que la denture intérieure (71) sur la paroi intérieure (611) de boîtier et les surfaces prismatiques (721) orientées vers celle-ci des prismes pentagonaux (72) qui sont susceptibles de coulisser sur le fond des rainures allongées (73) dans la direction périphérique sont déterminées de telle façon que les prismes pentagonaux (72) sont introduits par leurs éléments faisant fonction de ressort élastique (ressorts de compression à boudin 68) dans la denture intérieure (71) (figure 15).

27. Dispositif selon l'une des revendications 22 à 26, caractérisé en ce que deux saillies radiales (63) sont disposées en positions diamétralement opposées sur l'arbre intérieur (60),
en ce que deux entraîneurs (65) diamétraux décalés chacun de 90° par rapport aux saillies radiales (63) pénètrent dans la fente annulaire (62),
en ce que les quatre évidements ménagés dans la surface extérieure (601) de l'arbre intérieur (60) entre les entraîneurs (65) et les saillies radiales (63) et les quatre corps de serrage placés à l'intérieur de ces évidements sont conformés chacun en plusieurs évidements individuels (661 à 664) et corps de serrage individuels (701 à 704) respectivement, qui sont immédiatement adjacents dans la direction périphérique avec la contrainte suivante, que seul l'évidement individuel (661) le plus à l'extérieur est limité par un épaulement radial (631) des saillies radiales (63) et seul le corps de serrage individuel (704) le plus à l'extérieur en position opposée à la saillie radiale (63) vient en contact avec l'entraîneur (65) (figure 16).

28. Dispositif selon le préambule de la revendication 1, et notamment selon l'une des revendications 1 à 21, caractérisé en ce que la transmission (23) comporte un arbre intérieur (60) relié par une liaison fixe en rotation à un organe de réglage et un boîtier fixe, qui entoure de manière concentrique par une paroi intérieure (611) cylindrique l'arbre intérieur (30) en conservant une fente annulaire (62) par rapport à sa surface extérieure (601),
en ce que l'arbre intérieur (60) porte des rainures radiales (75), disposées de préférence décalées les unes par rapport aux autres du même écart angulaire, et des renflements (76) sont conformés sur la surface extérieure (601) en nombre deux fois plus grand, la hauteur de chacun de ces renflements (76) augmentant vers l'un des flancs (751) des rainures radiales (75),
en ce qu'un corps de serrage (67) est disposé entre chaque renflement (76) et la paroi intérieure (611) de boîtier, ce corps de serrage (67) étant coulissé au moyen d'un élément faisant fonction de ressort élastique (ressort de compression à boudin 68) en direction des flancs de rainure (751),
en ce que dans chaque rainure radiale (75) est disposé un entraîneur (65') axial d'entrée à une distance faible des flancs de rainure (751), cet entraîneur (65') pénétrant radialement au-delà du bord de la rainure dans la zone entre les corps de serrage (67) de telle façon que lors d'un coulissement tangentiel, il fait coulisser tout d'abord un corps de serrage (67) à l'encontre de la force de l'élément faisant fonction de ressort élastique (ressort de compression à boudin 68), avant de venir en position contre le flanc (751) de la rainure radiale (75) (figure 17).

29. Dispositif selon la revendication 28, caractérisé en ce que les corps de serrage (67), dans leur position de serrage provoquée par les éléments faisant fonction de ressort élastique (ressort de compression à boudin 68), sont placés au-dessus des flancs (751) des rainures radiales (75) dans la direction périphérique,
et en ce que les entraîneurs axiaux (65') sont conformés en barrettes trapézoïdales (78), qui s'étendent radialement approximativement jusqu'au fond des rainures et jusqu'à la paroi intérieure (611) de boîtier.

30. Dispositif selon le préambule de la revendication 1, et notamment selon l'une des revendications 1 à 21, caractérisé en ce que la transmission (23) comporte un arbre intérieur (60) d'entrée relié par une liaison fixe en rotation à un organe de réglage et un boîtier (61) qui entoure de manière coaxiale par une paroi intérieure (611) l'arbre intérieur (60) en conservant un espace annulaire (62''),
en ce que l'arbre intérieur (60) porte des bras radiaux (81, 82) décalés les uns par rapport aux autres de préférence selon le même écart angulaire et s'étendant jusqu'à proximité de la paroi intérieure (611) de boîtier, ainsi que des portions de serrage (83, 84) convexes, deux de ces portions de serrage (83, 84) étant chaque fois disposées entre des bras radiaux (81, 82) successifs dans la direction périphérique,
en ce que dans chaque section d'espace annulaire (621'', 622'') délimitée par deux bras radiaux (81, 82) successifs dans la direction périphérique sont disposés deux segments de serrage (801, 802) associés chacun à l'un des bras radiaux (81, 82) pour entraîner en rotation l'arbre intérieur (60) dans des sens de rotation inverses,
en ce que les segments de serrage (801, 802) sont disposés l'un à côté de l'autre dans la direction de l'axe de la transmission, s'étendent presque sur l'ensemble de la section d'espace annulaire (621'', 622'') dans la direction périphérique et sont conformés de telle façon qu'ils s'appliquent d'une part contre la paroi intérieure (611) de boîtier et d'autre part chacun contre une portion de serrage (83, 84) associée,
en ce qu'à chaque paire (80) de segments de serrage est associé un entraîneur (65) d'entrée, qui comporte un épaulement d'entraînement (651) radial pour l'un des segments de serrage (801) et un épaulement d'entraînement (652) radial opposé au premier pour l'autre segment de serrage (802),
et en ce qu'entre les paires (80) de segments de serrage successives dans la direction périphérique est disposé à chaque fois un élément faisant fonction de ressort élastique (ressort de compression à boudin 86) de telle façon que les segments de serrage (801, 802) appartenant à deux paires (80) de segments de serrage différentes sont coulissés en direction des épaulements d'entraînement (651, 652) de l'entraîneur (65) qui leur sont respectivement associés.

31. Dispositif selon la revendication 30, caractérisé en ce que dans chaque segment de serrage (801, 802) est ménagée une rainure radiale (85) ouverte vers la surface intérieure (611) de boîtier de telle façon que les rainures radiales (85) d'une paire (80) de segments de serrage coïncident approximativement dans la direction de l'arbre de la transmission,
en ce qu'un entraîneur (65) est disposé à l'intérieur des deux rainures radiales (85) d'une paire (80) de segments de serrage,
et en ce que les deux rainures radiales (85) d'une paire (80) de segments de serrage sont décalées légèrement à l'opposé l'une de l'autre dans la direction périphérique de telle façon que les épaulements d'entraînement (651, 652) radiaux de l'entraîneur (65) disposé dans les rainures radiales (85) soient moins écartés de celui des segments de serrage (respectivement 801 ou 802) qui est à chaque fois associé pour être entraîné que de l'autre segment de serrage (respectivement 802 ou 801).

32. Dispositif selon l'une des revendications 30 ou 31, caractérisé en ce que chaque élément élastique est formé par un ressort de compression à boudin (86) qui est conduit dans un perçage transversal (87) du bras radial (81, 82) et vient s'appliquer par chacune de ses extrémités contre un segment de serrage (801, 802) appartenant à des paires (80) de segments de serrage successives.

33. Dispositif selon l'une des revendications 30 à 32, caractérisé en ce que l'arbre intérieur (60) porte deux bras radiaux (81, 82) diamétraux,
en ce que les paires (80) de segments de serrage sont constituées par des segments de serrage (801, 802) de conformation identique,
et en ce que les segments de serrage (respectivement 801 ou 802) de deux paires (80) de segments de serrage qui agissent sur l'arbre intérieur (60) dans le même sens de rotation sont disposés à chaque fois en symétrie ponctuelle l'un de l'autre par rapport à l'arbre de la transmission.

34. Dispositif selon la revendication 33, caractérisé en ce que les segments de serrage (respectivement 801 ou 802) de deux paires (80) de segments de serrage qui agissent sur l'arbre intérieur (60) dans le même sens de rotation sont situés dans un même plan perpendiculaire à l'axe de la transmission.

35. Dispositif selon la revendication 33, caractérisé en ce que les segments de serrage (respectivement 801 ou 802) des deux paires (80) de segments de serrage agissant sur l'arbre intérieur (60) dans le même sens de rotation sont situés dans deux plans parallèles perpendiculaires à l'axe de la transmission.
